(19) **Europäisches Patentamt / European Patent Office / Office européen des brevets**

(11) **EP 4 568 132 A1**

(12) **EUROPEAN PATENT APPLICATION**
published in accordance with Art. 153(4) EPC

(43) Date of publication:
**11.06.2025  Bulletin 2025/24**

(21) Application number: **23859318.0**

(22) Date of filing: **29.08.2023**

(51) International Patent Classification (IPC):
**H04B 7/06** (2006.01)

(52) Cooperative Patent Classification (CPC):
**H04B 7/0456; H04B 7/06; H04B 7/08**

(86) International application number:
**PCT/CN2023/115369**

(87) International publication number:
**WO 2024/046288 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022  CN 202211038332**

(71) Applicant: **Huawei Technologies Co., Ltd.**
**Shenzhen, Guangdong 518129 (CN)**

(72) Inventors:
• **CHEN, Jiaxuan**
  **Shenzhen, Guangdong 518129 (CN)**
• **HANG, Haicun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57)     Embodiments of this application provide a communication method and apparatus. The method includes: An encoder compresses channel information of M layers by using at least two artificial intelligence AI models, to obtain N pieces of compressed information, where each of the N pieces of compressed information is obtained by compressing channel information of a part of layers in the channel information of the M layers, N and M are integers greater than 1, and N is less than M. The encoder sends the N pieces of compressed information to a decoder. Compared with a conventional manner, this application in which channel information of a plurality of layers can be fed back by using an AI network can reduce overheads caused by feeding back the channel information. In addition, N is less than M, that is, joint compression is performed on channel information of at least two of the M layers. In comparison with independent compression on channel information of each of the M layers, this can further reduce feedback overheads. Moreover, N is greater than 1. In comparison with joint compression on the channel information of the M layers for one time, this can reduce computational complexity.

200

Decoder        Encoder

210: The encoder compresses channel information of M layers by using at least two AI models, to obtain N pieces of compressed information, where N and M are integers greater than 1, and N is less than M

220: N pieces of compressed information

230: The decoder decodes the N pieces of compressed information to obtain the channel information of the M layers

FIG. 2

## Description

This application claims priority to Chinese Patent Application No. 202211038332.X, filed with the China National Intellectual Property Administration on August 29, 2022, and entitled "COMMUNICATION METHOD AND APPARATUS", which is incorporated herein by reference in its entirety.

## TECHNICAL FIELD

This application relates to the field of communication technologies, and more specifically, to a communication method and apparatus.

## BACKGROUND

To support a network device to transmit a plurality of streams of data to a terminal device in parallel, the network device needs to determine a precoding matrix for a plurality of streams based on channel information, for example, channel state information (channel state information, CSI), fed back by the terminal device. A quantity of streams herein may also be referred to as a quantity of ranks (ranks) or a quantity of layers. Overheads of feeding back the channel information increase with the quantity of streams.

## SUMMARY

This application provides a communication method and apparatus, to reduce overheads caused by a channel information feedback.

According to a first aspect, a communication method is provided. The method may be performed by an encoder, or may be performed by a chip or a circuit used in the encoder. This is not limited in this application. For ease of description, the following uses an example in which the method is performed by the encoder for description.

The method may include: An encoder compresses channel information of M layers by using at least two artificial intelligence AI models, to obtain N pieces of compressed information, where each of the N pieces of compressed information is obtained by compressing channel information of a part of layers in the channel information of the M layers by using at least one of the at least two AI models, N and M are integers greater than 1, and N is less than M. The encoder sends the N pieces of compressed information to the decoder.

Based on the foregoing technical solution, the encoder compresses the channel information of the M layers by using the at least two AI models, to obtain the N pieces of compressed information, and sends the N pieces of compressed information to the decoder, so that the decoder can perform decoding based on the N pieces of compressed information to restore the channel information of the M layers. In this way, channel information of a plurality of layers may be fed back by using an AI network. In comparison with a conventional manner, this can reduce overheads caused by feeding back the channel information. In addition, the N pieces of compressed information are obtained based on the channel information of the M layers, and N is less than M. In other words, joint compression is performed on channel information of at least two of the M layers. In comparison with separate compression on channel information of each of the M layers, this can further reduce feedback overheads by using a relationship between different channel information between the layers. In addition, N is greater than 1. In comparison with joint compression on the channel information of the M layers for one time, this can reduce computational complexity.

With reference to the first aspect, in some implementations of the first aspect, the N pieces of compressed information include at least one piece of first compressed information and at least one piece of second compressed information. The first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

Based on the foregoing technical solution, a compression manner of the channel information of the M layers includes the separate compression and the joint compression. In this way, not only overheads caused by the separate compression on the channel information of the M layers can be reduced, but also computational complexity caused by one time of the joint compression on the channel information of the M layers can be reduced.

With reference to the first aspect, in some implementations of the first aspect, a compression manner of the channel information of the M layers is determined based on at least one of the following information: a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M. The compression manner of the channel information of the M layers includes joint compression, or the compression manner of the channel information of the M layers includes joint compression and separate compression.

The separate compression indicates that separate compression performed on channel information of one layer. For example, channel information of one layer is independently input into the AI model to obtain one piece of compressed information.

The joint compression indicates joint compression performed on channel information of at least two layers. For example, channel information of at least two layers is input into the AI model to obtain one piece of compressed information.

In an example, the compression manner of the channel information of the M layers is determined based on the computing resource of the encoder. For example, if the computing resource of the encoder is large, for example, available computing power used by the encoder to compress the channel information is greater than or equal to a preset value, the compression manner of the channel information of the M layers may include the joint compression. For another example, if available computing power used by the encoder to compress the channel information is less than the preset value, separate compression may be performed on the channel information of each layer.

In another example, the compression manner of the channel information of the M layers is determined based on the computing resource of the decoder. For example, if the computing resource of the decoder is large, for example, available computing power used by the decoder to compress the channel information is greater than or equal to a preset value, the compression manner of the channel information of the M layers may include the joint compression.

In another example, the compression manner of the channel information of the M layers is determined based on the AI model of the encoder. For example, if the AI model of the encoder is applicable to the joint compression (for example, an AI model applicable to the separate compression is being updated), the compression manner of the channel information of the M layers may be the joint compression. If the AI model of the encoder is applicable to the separate compression (for example, the AI model applicable to the joint compression is being updated), the compression manner of the channel information of the M layers may be the separate compression.

In another example, the compression manner of the channel information of the M layers is determined based on the AI model of the decoder. For example, if the AI model of the decoder is applicable to decoding of the joint compression, the compression manner of the channel information of the M layers may include the joint compression. If the AI model of the decoder is applicable to decoding of the separate compression, the compression manner of the channel information of the M layers may include the separate compression.

In another example, the compression manner of the channel information of the M layers is determined based on the performance of performing joint compression on channel information of a part of layers in the channel information of the M layers. For example, if the performance of performing joint compression on channel information of a part of layers in the channel information of the M layers is greater than or equal to a preset value, the compression manner of the channel information of the M layers may include the joint compression.

In another example, the compression manner of the channel information of the M layers is determined based on the performance of performing separate compression on channel information of a part of layers in the channel information of the M layers. For example, if the performance of performing separate compression on channel information of a part of layers in the channel information of the M layers is greater than or equal to the preset value, the compression manner of the channel information of the M layers may include the separate compression.

In another example, the compression manner of the channel information of the M layers is determined based on the value of M. For example, if M is greater than 1, the compression manner of the channel information of the M layers includes joint compression. For another example, if M is greater than 1 and less than or equal to a first preset value, the compression manner of the channel information of the M layers is the separate compression; or if M is greater than the first preset value, the compression manner of the channel information of the M layers includes joint compression.

It may be understood that one or more of the foregoing examples may be used in combination to determine the compression manner of the channel information of the M layers, for example, the compression manner is determined based on the computing resource and the AI model of the encoder. If the available computing power used by the encoder to compress the channel information is greater than or equal to the preset value, and the AI model of the encoder is applicable to the joint compression, the compression manner of the channel information of the M layers may include the joint compression.

Based on the foregoing technical solution, the compression manner of the channel information of the M layers may be determined based on the foregoing one or more pieces of information. In this way, a proper compression manner may be dynamically selected based on an actual communication status, for example, some information of the encoder and/or the decoder, the layer quantity M, or the performance of the separate compression or the joint compression.

With reference to the first aspect, in some implementations of the first aspect, the method further includes: The encoder determines the compression manner of the channel information of the M layers, where the compression manner of the channel information of the M layers includes joint compression, or the compression manner of the channel information of the M layers includes joint compression and separate compression.

Based on the foregoing technical solution, the encoder may determine the compression manner of the channel information of the M layers, and may further compress the channel information of the M layers based on a compression manner that is determined by the encoder and that is of the channel information of the M layers, to obtain the N pieces of compressed information. In this way, the encoder may dynamically select the proper compression manner based on the actual communication status, and the manner is flexible.

With reference to the first aspect, in some implementations of the first aspect, the method further includes: The encoder sends the compression manner of the channel information of the M layers to the decoder.

Based on the foregoing technical solution, the encoder may send the compression manner of the channel information of the M layers to the decoder. In this way, the decoder obtains the channel information of the M layers through decoding based on the compression manner of the channel information of the M layers and the received N pieces of compressed information.

With reference to the first aspect, in some implementations of the first aspect, the method further includes: The encoder receives the compression manner of the channel information of the M layers, where the compression manner of the channel information of the M layers includes joint compression, or the compression manner of the channel information of the M layers includes joint compression and separate compression.

Based on the foregoing technical solution, the decoder may determine the compression manner of the channel information of the M layers and send the compression manner to the encoder. In this way, the decoder can dynamically select the proper compression manner based on the actual communication status, and overheads caused by determining the compression manner by the encoder can be reduced.

With reference to the first aspect, in some implementations of the first aspect, the method further includes: The encoder receives a reference signal from the decoder; and the encoder performs channel measurement based on the reference signal, to obtain the channel information of the M layers.

With reference to the first aspect, in some implementations of the first aspect, the method further includes: The encoder determines the value of M based on a result of the channel measurement.

With reference to the first aspect, in some implementations of the first aspect, that an encoder compresses channel information of M layers by using at least two artificial intelligence AI models includes: The encoder determines a first AI model based on an arrangement manner of channel information of each layer and between layers in X layers, where the at least two AI models include the first AI model, the M layers include the X layers, and X is an integer greater than 1 and less than M. The encoder performs joint compression on channel information of the X layers by using the first AI model, to obtain first compressed information, where the N pieces of compressed information include the first compressed information.

For example, the arrangement manner of the channel information of each layer and between the layers in the X layers includes any one of the following: adjacent arrangement of channel information of different subbands at a same layer, and adjacent arrangement of channel information of different layers in a same subband.

For example, that the encoder determines a first AI model based on an arrangement manner of channel information of each layer and between layers in X layers includes: The encoder calculates, based on the arrangement manner of the channel information of each layer and between the layers in the X layers, accuracy of feeding back the channel information in the joint compression manner, and further determines an AI model used for the joint compression, that is, the first AI model.

Based on the foregoing technical solution, the encoder may perform joint compression on the channel information of the X layers based on the arrangement manner of the channel information of each layer and between the layers in the X layers. The decoder may perform decoding based on compressed information obtained by compressing the channel information of the X layers, and correctly parse an output of the decoder based on the arrangement manner of the channel information of each layer and between the layers in the X layers, to obtain the channel information of the X layers.

With reference to the first aspect, in some implementations of the first aspect, the method further includes: The encoder receives the arrangement manner of the channel information of each layer and between the layers in the X layers from the decoder; or the encoder sends the arrangement manner of the channel information of each layer and between the layers in the X layers to the decoder.

For example, there is a correspondence between an index value and the arrangement manner of the channel information of each layer and between the layers in the X layers. For example, the encoder receives the arrangement manner of the channel information of each layer and between the layers in the X layers from the decoder. In a possible implementation, the encoder receives an index value from the decoder, and the index value indicates the arrangement manner of the channel information of each layer and between the layers in the X layers. In other words, the encoder may determine, based on the index value and the correspondence between the index value and the arrangement manner of the channel information of each layer and between the layers in the X layers, an arrangement manner corresponding to the index value.

Based on the foregoing technical solution, the decoder may determine the arrangement manner of the channel information of each layer and between the layers in the X layers, and send the arrangement manner to the encoder. In this way, the encoder can perform encoding based on the arrangement manner indicated by the decoder, so that the decoder can correctly parse decoded information.

With reference to the first aspect, in some implementations of the first aspect, the method further includes: The encoder sends first information to the decoder, where the first information indicates a sequence of channel information of different layers during joint compression performed on channel information of at least two layers in the channel information of the M layers.

For example, there is a correspondence between an index value and a sequence of channel information of different layers. In a possible implementation, the first information is an index value, and the index value indicates a sequence of channel information of different layers. In other words, the decoder determines, based on the index value and a correspondence between the index value and the sequence of the channel information of different layers, the sequence that is of the channel information of different layers and that corresponds to the index value.

Based on the foregoing technical solution, the encoder may compress the jointly compressed channel information based on the sequence of the channel information during the joint compression; and the decoder may correctly parse the output of the decoder based on the sequence of the channel information during the joint compression.

With reference to the first aspect, in some implementations of the first aspect, the encoder is a terminal device, and the decoder is a network device.

With reference to the first aspect, in some implementations of the first aspect, channel information corresponding to each of the N pieces of compressed information does not overlap.

According to a second aspect, a communication method is provided. The method may be performed by a decoder, or may be performed by a chip or a circuit used in the decoder. This is not limited in this application. For ease of description, the following uses an example in which the method is performed by the decoder for description.

The method may include: A decoder receives N pieces of compressed information from an encoder, where the N pieces of compressed information are obtained by compressing channel information of M layers by using at least two artificial intelligence AI models, each of the N pieces of compressed information is obtained by compressing channel information of a part of layers in the channel information of the M layers by using at least one of the at least two AI models, N and M are integers greater than 1, and N is less than M. The decoder decodes the N pieces of compressed information to obtain the channel information of the M layers.

With reference to the second aspect, in some implementations of the second aspect, the N pieces of compressed information include at least one piece of first compressed information and at least one piece of second compressed information. The first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

With reference to the second aspect, in some implementations of the second aspect, a compression manner of the channel information of the M layers is determined based on at least one of the following information: a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M. The compression manner of the channel information of the M layers includes joint compression, or the compression manner of the channel information of the M layers includes joint compression and separate compression.

With reference to the second aspect, in some implementations of the second aspect, that the decoder decodes the N pieces of compressed information includes: The decoder decodes the N pieces of compressed information based on the compression manner of the channel information of the M layers, where the compression manner of the channel information of the M layers includes joint compression, or the compression manner of the channel information of the M layers includes joint compression and separate compression.

With reference to the second aspect, in some implementations of the second aspect, the method further includes: The decoder determines the compression manner of the channel information of the M layers.

With reference to the second aspect, in some implementations of the second aspect, the method further includes: The decoder sends the compression manner of the channel information of the M layers to the encoder.

With reference to the second aspect, in some implementations of the second aspect, the method further includes: The decoder receives the compression manner of the channel information of the M layers from the encoder.

With reference to the second aspect, in some implementations of the second aspect, that the decoder decodes the N pieces of compressed information to obtain the channel information of the M layers includes: The decoder decodes the first compressed information based on an arrangement manner of channel information of each layer and between layers in X layers, to obtain channel information of the X layers, where the first compressed information is obtained by performing joint compression on the channel information of the X layers by using the first AI model in the at least two AI models, the N pieces of compressed information include the first compressed information, the M layers include the X layers, and X is an integer greater than 1 and less than M.

For example, the arrangement manner of the channel information of each layer and between the layers in the X layers includes any one of the following: adjacent arrangement of channel information of different subbands at a same layer, and adjacent arrangement of channel information of different layers in a same subband.

Based on the foregoing technical solution, the decoder may input the first compressed information into an AI model, and parse an output based on the arrangement manner of the channel information of each layer and between the layers in the X layers, to obtain the channel information of the X layers.

With reference to the second aspect, in some implementations of the second aspect, the method further includes: The decoder sends the arrangement manner of the channel information of each layer and between the layers in the X layers to the encoder; or the decoder receives the arrangement manner of the channel information of each layer and between the layers in the X layers from the encoder.

With reference to the second aspect, in some implementations of the second aspect, the method further includes: The decoder receives first information from the encoder, where the first information indicates a sequence of channel information of different layers during joint compression performed on channel information of at least two layers in the channel information of the M layers.

With reference to the second aspect, in some implementations of the second aspect, the encoder is a terminal device, and the decoder is a network device.

With reference to the second aspect, in some implementations of the second aspect, channel information corresponding to each of the N pieces of compressed information does not overlap.

For beneficial effect of the second aspect and the possible designs, refer to related descriptions in the first aspect. Details are not described herein again.

According to a third aspect, a communication apparatus is provided. The apparatus is configured to perform the method provided in any one of the first aspect to the second aspect. Specifically, the apparatus may include units and/or modules configured to perform the method provided in any one of the foregoing implementations of the first aspect or the second aspect, for example, a processing unit and/or a communication unit.

In an implementation, the apparatus is a communication device (for example, an encoder or a decoder). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing implementations of the first aspect or the second aspect.

In an implementation, the apparatus is a communication device (for example, an encoder or a decoder).

In another implementation, the apparatus is a chip, a chip system, or a circuit used in the communication device.

According to a fifth aspect, this application provides a processor, configured to perform the method provided in the foregoing aspects.

Operations such as sending and obtaining/receiving related to the processor may be understood as operations such as outputting and inputting of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code executed by a device, and the program code is used to perform the method provided in any one of the implementations of the first aspect or the second aspect.

According to a seventh aspect, a computer program product including instructions is provided. When the computer program product runs on a computer, the computer is enabled to perform the method in any one of the implementations of the first aspect or the second aspect.

According to an eighth aspect, a chip is provided. The chip includes a processor and a communication interface. The processor reads, by using the communication interface, instructions stored in a memory, to perform the method provided in any one of the implementations of the first aspect or the second aspect.

Optionally, in an implementation, the chip further includes the memory, the memory stores computer programs or the instructions, and the processor is configured to execute the computer programs or the instructions stored in the memory. When the computer programs or the instructions are executed, the processor is configured to perform the method provided in any one of the implementations of the first aspect or the second aspect.

According to a ninth aspect, a communication system is provided, including the encoder and the decoder.

In this application, the encoder may also be referred to as an encoding apparatus, and may have another function other than encoding. The decoder may also be referred to as a decoding apparatus, and may have another function other than decoding.

**BRIEF DESCRIPTION OF DRAWINGS**

FIG. 1 is a diagram of a wireless communication system 100 applicable to an embodiment of this application;

FIG. 2 is a diagram of a communication method 200 according to an embodiment of this application;

FIG. 3 is a diagram of an arrangement manner of channel information of each layer and between layers in X layers;

FIG. 4 is another diagram of an arrangement manner of channel information of each layer and between layers in X layers;

FIG. 5 is a diagram of encoding and decoding for compressing channel information of M layers;

FIG. 6 is a diagram of an output of a decoder;

FIG. 7 is a diagram of a communication method 700 according to an embodiment of this application;

FIG. 8 is a diagram of channel information output by a model A;

FIG. 9 is a diagram of channel information output by a model B;

FIG. 10 is a diagram of a communication method 1000 according to an embodiment of this application;

FIG. 11 is a block diagram of a communication apparatus 1100 according to an embodiment of this application;

FIG. 12 is a diagram of another communication apparatus 1200 according to an embodiment of this application; and

FIG. 13 is a diagram of a chip system 1300 according to an embodiment of this application.

**DESCRIPTION OF EMBODIMENTS**

The following describes technical solutions in embodiments of this application with reference to accompanying drawings.

The technical solutions provided in this application may be applied to various communication systems such as a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an Internet of things (internet of things, IoT) communication system or another communication system.

The terminal device in embodiments of this application includes various devices having a wireless communication function, and may be configured to connect to a person, an object, a machine, and the like. The terminal device may be widely used in various scenarios, for example, cellular communication, D2D, V2X, peer to peer (peer to peer, P2P), M2M, MTC, IoT, virtual reality (virtual reality, VR), augmented reality (augmented reality, AR), industrial control, autonomous driving, telemedicine, smart grid, smart furniture, smart office, smart wearable, smart transportation, smart city drone, robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an uncrewed aerial vehicle, a helicopter, a multi-helicopter, a four-helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, the following uses a terminal or UE as an example of the terminal device for description.

It should be understood that in some scenarios, the UE may further serve as a base station. For example, a UE may serve as a scheduling entity that provides sidelink signals between UEs in scenarios such as V2X, D2D, or P2P.

In embodiments of this application, an apparatus configured to implement a function of the terminal device may be a terminal device; or may be an apparatus that can support the terminal device to implement the function, for example, a chip system or a chip, where the apparatus may be installed in the terminal device. In embodiments of this application, the chip system may include a chip, or may include a chip and another discrete component.

A network device in embodiments of this application may be a device configured to communicate with the terminal device. The network device may alternatively be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point (transmission point, TP), a primary station, a secondary station, a motor slide retainer (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that implements a base station function in D2D, V2X, and M2M communication, a network side device in a 6G network, a device that implements a base station function in a future communication system, or the like. The base station may support networks of a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In other examples, the helicopter or the uncrewed aerial vehicle may be configured as a device for communicating with another base station.

In embodiments of this application, an apparatus configured to implement a function of the network device may be a terminal device; or may be an apparatus that can support the network device to implement the function, for example, a chip system or a chip, where the apparatus may be installed in the network device. In embodiments of this application, the chip system may include a chip, or may include a chip and another discrete component.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are situated are not limited in embodiments of this application.

First, a network architecture applicable to embodiments of this application is briefly described as follows.

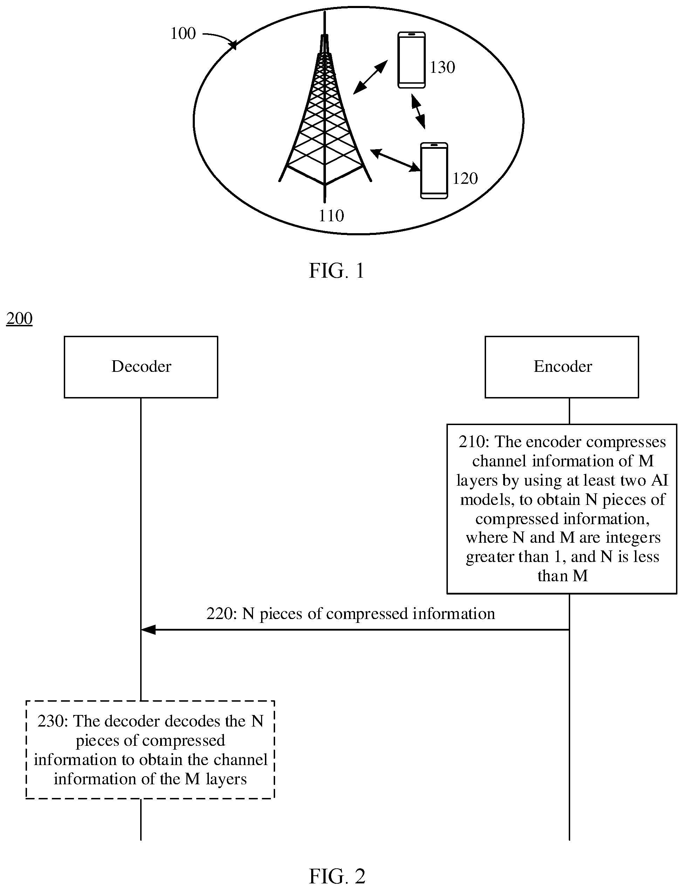

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may also communicate with each other. For example, the terminal devices may directly communicate with each other. For another example, the terminal devices may communicate with each other by using another communication device, for example, the network device or another terminal device.

When the network device communicates with the terminal device, the network device may manage one or more cells, and one cell may have an integer quantity of terminal devices. Optionally, the network device 110 and the terminal device 120 form a single-cell communication system. Without loss of generality, the cell is referred as a cell #1. The network device 110 may be a network device in the cell #1, or the network device 110 may serve a terminal device (for example, the terminal device 120) in the cell #1.

It should be noted that the cell may be understood as an area within coverage of a wireless signal of a network device.

It should be understood that FIG. 1 is merely a simplified diagram of an example for ease of understanding. The wireless communication system 100 may further include another network device or may further include another terminal device, which is not shown in FIG. 1. Embodiments of this application are applicable to any communication scenario in which a transmit end device communicates with a receive end device.

For ease of understanding embodiments of this application, the following first briefly describes terms in embodiments of this application.

1. Artificial intelligence (artificial intelligence, AI) enables machines to have learning capabilities, accumulate experience, and resolve problems such as natural language understanding, image recognition, and chess playing that can be resolved by humans through experience.

2. Machine learning (machine learning) is an implementation of artificial intelligence. The machine learning is a method that provides learning capabilities for machines to complete functions that cannot be implemented through direct programming. In practice, machine learning is a method of training a model by using data, and then using the model for prediction.

3. A neural network (neural network) is a specific embodiment of a machine learning method. The neural network is a mathematical model that imitates behavior features of an animal neural network and processes information. The neural network may include three types of computing layers: an input layer, a hidden layer, and an output layer. Each layer has one or more logical determining units, and the logical determining unit may be referred to as a neuron (neuron). Common neural network structures include a feedforward neural network (feedforward neural network, FNN), a convolutional neural network (convolutional neural network, CNN), a recurrent neural network (recurrent neural network, RNN), and the like. These network structures are formed based on neurons. Each neuron may perform a weighted summation operation on input values of the neuron, and generate an output based on a weighted summation result by using a non-linear function. A weight value for performing the weighted summation operation by the neuron in the neural network and the non-linear function may be referred to as parameters of the neural network. A connection relationship between neurons in a neural network may be referred to as a structure of the neural network, and parameters of all neurons in the neural network may form parameters of the neural network.

4. A deep neural network (deep neural network) is a neural network having a plurality of hidden layers.

5. Deep learning (deep learning) is machine learning based on a deep neural network.

6. A precoding matrix indicator (precoding matrix indicator, PMI) may indicate a precoding matrix. The precoding matrix may be a precoding matrix determined by the terminal device based on a channel matrix of each frequency band. For example, the channel matrix may be determined by the terminal device in a channel estimation manner. A vector in the precoding matrix may be referred to as a precoding vector.

For example, to obtain a precoding matrix that can adapt to a channel, the network device may perform channel measurement in advance by sending a reference signal to the terminal device, and the terminal device may determine a precoding vector of each frequency band based on a channel matrix of each frequency band.

It is assumed that a channel matrix of a frequency band is H, the terminal device may perform singular value decomposition (singular value decomposition, SVD) on the channel matrix H or a covariance matrix $HH^H$ of the channel matrix, to determine a precoding matrix of the frequency band. A superscript H indicates a conjugate transpose. For example, $H^H$ indicates a conjugate transpose of the matrix (or vector) H. Then, the terminal device may quantize each element in the precoding matrix of each frequency band, and feed back a quantized value to the network device by using the PMI, so that the network device restores the precoding matrix based on the PMI.

The foregoing descriptions of the PMI are merely examples, and should not constitute any limitation on this application.

With development of wireless communication technologies, increasing services are supported, and increasingly high requirements are imposed on a communication system in terms of indicators such as a system capacity and a communication delay. A communication rate can be effectively improved by extending a bandwidth available to UE. To support a wider available bandwidth, a plurality of contiguous or non-contiguous frequency bands may be allocated to the UE for communication. To support effective communication on each frequency band, the network device needs to obtain channel state information (channel state information, CSI) on each frequency band. In a possible manner, the UE performs uplink feedback, so that the network device obtains downlink CSI. Specifically, the network device sends a downlink reference signal to the UE, and the UE receives the downlink reference signal. The UE is known of sending information of the downlink reference signal. Therefore, the UE may estimate (or measure), based on the sending information of the downlink reference signal and the downlink reference signal received by the UE, a downlink channel through which the downlink reference signal passes, the UE obtains a downlink channel matrix based on the measurement, generates CSI, and feeds back the generated CSI to the network device.

An important part of the CSI feedback is a PMI. To be specific, one or more bit values are used in the CSI to quantize a channel matrix or a precoding matrix. For example, the channel matrix or the precoding matrix may be quantized by using a "0" bit value and/or a "1" bit value. As described above, the precoding matrix may be the precoding matrix determined by the UE based on the channel matrix of each frequency band.

In a conventional PMI design (or may also be referred to as codebook design) method, a series of precoding matrices and corresponding numbers are predefined in a protocol. These precoding matrices may be referred to as codewords or precoding information. A channel matrix or a precoding matrix may be approximated by using a predefined codeword or a linear combination of a plurality of predefined codewords. Therefore, the UE feeds back, to the network device by using the PMI, the number corresponding to the codeword and at least one weighting coefficient, so that the network device side restores the channel matrix or the precoding matrix. Higher precision of the CSI fed back by the UE indicates richer information and more accurate channel information restored by the network device based on the CSI. Therefore, the precoding matrix determined by the network device is more accurate, a signal-to-interference-plus-noise ratio of a signal received by the UE is higher, and a system capacity is larger. However, as a scale of an antenna array in a system increases, a quantity of antenna ports that can be supported increases. Because a size of a complete channel matrix is directly proportional to the quantity of antenna ports, feeding back the complete channel matrix to the network device by using the CSI in a massive multiple-input multiple-output (massive multiple-input multiple-output, Massive MIMO) system means huge feedback overheads.

To support parallel transmission of multi-stream data to the UE, the network device needs to restore a precoding matrix for multi-streaming based on CSI feedback information. A quantity of streams herein may also be referred to as a rank (rank) quantity or a layer quantity, and is collectively represented by a layer quantity in the following. In a conventional multi-layer CSI feedback manner, for a precoding matrix at each layer, feedback information is generated based on a codebook by using the foregoing method, so that the network device can restore the precoding matrix at the layer. Therefore, CSI feedback overheads increase as the layer quantity increases.

Machine learning, for example, deep learning, has a strong non-linear feature extraction capability, and can extract correlations between different layers. Therefore, in comparison with a conventional solution, machine learning may include more channel information in a feedback of a same scale. This reduces information loss of a CSI compression feedback and improves accuracy of channel restoration on the network device side. In addition, in comparison with the conventional solution, a smaller feedback amount may be used to represent same channel information, to further reduce feedback overheads.

In view of this, this application provides a manner in which an AI network is used to feed back multi-layer channel information, so that feedback overheads are reduced, and computational complexity of the AI network can also be reduced.

It may be understood that a principle of feeding back the channel information by using the AI network may be as follows: An input of an AI model deployed in an encoder is a group of channel information, an output of the AI model deployed in the encoder is a piece of compressed information, an input of an AI model deployed in a decoder is a piece of compressed information, and an output of the AI model deployed in the decoder is a group of channel information. An example in which the terminal device feeds back the channel information to the network device is used for description. For example, the terminal device may use a training set, and input channel data in the training set to the encoder to obtain an output. An error caused by compressing the channel data may be used as a loss function, and the loss function is a function of a weight of the AI model of the encoder. If the loss function is less than a threshold, the training is stopped. Otherwise, the weight of the encoder is updated to reduce the loss function.

It may be further understood that the AI model may be implemented by using a hardware circuit, software, or a combination of software and hardware. This is not limited. A non-limiting example of the software includes program code, a program, a subprogram, an instruction, an instruction set, code, a code segment, a software module, an application, a software application, or the like.

It should be noted that, in this application, "indication" may include direct indication, indirect indication, explicit indication, and implicit indication. When a piece of indication information is described to indicate A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periodicities and/or sending occasions of these pieces of sub-information may be the same or may be different.

The following describes in detail a communication method provided in an embodiment of this application with reference to the accompanying drawings. Embodiments provided in this application may be applied to the network architecture shown in FIG. 1. This is not limited.

In the following embodiments, for example, an encoder is a terminal device, and a decoder is a network device; or the encoder is a terminal device, and the decoder is another terminal device; or the encoder is a network device, and the decoder is another network device; or the encoder is a network device, and the decoder is a terminal device. This is not limited. It may be understood that the encoder in the following may be replaced with an encoding apparatus, and the decoder may be replaced with a decoding apparatus. In addition, it may be further understood that the encoder in the following may include a circuit other than the AI model, for example, a processing circuit, a storage circuit, and a transceiver circuit.

In the following embodiments, a plurality of AI models may be deployed in the encoder, so that the encoder may perform encoding based on the deployed AI models, for example, compress channel information. A plurality of AI models may be deployed in the decoder, so that the decoder may perform decoding based on the deployed AI models, for example, restore compressed information to obtain the channel information. For brevity, an AI model deployed by the encoder is referred to as an AI model of the encoder, and an AI model deployed by the decoder is referred to as an AI model of the decoder in the following.

FIG. 2 is a diagram of a communication method 200 according to an embodiment of this application. A method 200 may include the following steps.

210: An encoder compresses channel information of M layers by using at least two AI models, to obtain N pieces of compressed information, where N and M are integers greater than 1, and N is less than M.

In a possible implementation, the encoder receives a reference signal from a decoder, and the encoder performs channel measurement based on the reference signal, to obtain the channel information of the M layers.

Each of the N pieces of compressed information is obtained by compressing channel information of a part of layers in the channel information of the M layers by using at least one of the at least two AI models. In other words, each of the N pieces of compressed information is obtained by compressing channel information of a part of layers in the channel information of the M layers by using the AI model in the at least two AI models.

For example, the channel information of the M layers is divided into N groups of channel information, and each group of channel information is compressed by using the AI model, to obtain the N pieces of compressed information. Each group of channel information includes channel information of at least one layer. The N groups of channel information may not overlap.

For example, a compression manner of each group of channel information may be separate compression or joint compression. In embodiments of this application, the compression manner is mentioned for a plurality of times, and the compression manner includes the separate compression and the joint compression.

The separate compression indicates that channel information of one layer is separately compressed. For example, the channel information of the layer is input into the AI model to obtain one piece of compressed information.

The joint compression indicates that joint compression is performed on channel information of at least two layers (for example, channel information of two layers, channel information of three layers, or channel information of four layers). For example, channel information of at least two layers is input into the AI model to obtain one piece of compressed information.

Optionally, the compression manner of the channel information of the M layers is the joint compression, or the compression manner of the channel information of the M layers includes the separate compression and the joint compression.

In a possible case, the compression manner of the channel information of the M layers includes the separate compression and the joint compression. Based on this case, the N pieces of compressed information include at least one piece of first compressed information and at least one piece of second compressed information. The first compressed information is obtained by performing joint compression on channel information of at least two layers in the channel information of the M layers by using a first AI model in the at least two AI models, and the second compressed information is obtained by performing separate compression on channel information of single layer in the channel information of the M layers by using a second AI model in the at least two AI models. In other words, the channel information of the M layers is divided into N groups of channel information, a part of groups of channel information in the N groups of channel information are compressed in the joint compression manner, and the other part of groups of channel information in the N groups of channel information are compressed in the separate compression manner. The first AI model may represent an AI model used for the joint compression, and the second AI model may represent an AI model used for the separate compression.

In another possible case, the compression manner of the channel information of the M layers is the joint compression. In other words, the channel information of the M layers is divided into N groups of channel information, and each group of channel information is compressed in the joint compression manner. Based on this case, the N pieces of compressed information include at least two pieces of first compressed information, and the first compressed information is obtained by performing joint compression on channel information of at least two layers in the channel information of the M layers by using the first AI model in the at least two AI models.

For example, the compression manner may be represented in an array manner. For example, the channel information of the M layers is divided into N groups of channel information, and the compression manner of the channel information of the M layers may indicate the N groups and an element of each group in a numerical manner. For example, the compression manner of the channel information of the M layers is represented as: [layer 1, layer 2], and [layer 3], which indicates that the channel information of the M layers is divided into two groups, joint compression is performed on channel information of a first layer and a second layer in a first set, and separate compression is performed on channel information of a third layer in a second set. For another example, the compression manner of the channel information of the M layers is represented as: [layer 1, layer 2], and [layer 3, layer 4], which indicates that the channel information of the M layers is divided into two groups, joint compression is performed on channel information of a first layer and a second layer in a first set, and joint compression is performed on channel information of a third layer and a fourth layer in a second set. For another example, the compression manner of the channel information of the M layers is represented as: [layer 1], [layer 2, layer 3, layer 4], and [layer 5], which indicates that the channel information of the M layers is divided into three groups, separate compression is performed on channel information of a first layer in a first set, joint compression is performed on channel information of a second layer, a third layer, and a fourth layer in a second set, and separate compression is performed on channel information of a fifth layer in a third set.

Optionally, AI models corresponding to the N pieces of compressed information are partially the same, completely the same, or completely different. In other words, in embodiments of this application, AI models corresponding to all groups of channel information may be partially the same, or may be completely the same, or may be completely different.

In a possible case, different compression manners correspond to different AI models. For example, the separate compression corresponds to the second AI model, and the joint compression corresponds to the first AI model. If the encoder performs separate compression on channel information of one layer, the second AI model is used. If the encoder performs joint compression on channel information of at least two layers, the first AI model is used.

In another possible case, each group of channel information corresponds to a different AI model. For example, it is assumed that the channel information of the M layers is divided into three groups, which are denoted as: a first group of channel information, a second group of channel information, and a third group of channel information. The encoder compresses the first group of channel information by using the first AI model, the encoder compresses the second group of channel information by using the second AI model, and the encoder compresses the third group of channel information by using a third AI model.

In embodiments of this application, a structure of the AI model is not limited. For example, the structure of the AI model may be, for example, an AI model of any one of the following structures: an AI model based on a fully connected layer, a convolutional neural network, or a transformer structure. In embodiments of this application, for an AI model deployed in the encoder, an input of the AI model is a group of channel information, an output of the AI model is a piece of compressed information, and a dimension of the compressed information is less than a dimension of the input channel information. For an AI model deployed in the decoder, an input of the AI model is a piece of compressed information, an output of the AI model is a group of channel information, and a dimension of the compressed information is less than a dimension of the input channel information.

In addition, a manner of determining the AI models used by the encoder and the decoder, that is, the AI model used by the encoder to compress the channel information of the M layers, and the AI model used by the decoder to decode the N pieces of compressed information is not limited. In a possible implementation, the manner is predefined, for example, predefined in a standard or pre-agreed on. In another possible implementation, the encoder provides the decoder with information about the AI model used to compress the channel information of the M layers (for example, the AI model used by the encoder to compress the channel information of the M layers, or an identifier of the AI model used by the encoder to compress the channel information of the M layers). The decoder determines, based on the information that is about the AI model and that is provided by the encoder, the AI model used to decode the N pieces of compressed information. In another possible implementation, the encoder or the decoder determines, based on the compression manner, the AI model used by the encoder or the decoder. For example, the encoder provides the decoder with the compression manner, and the decoder may determine, based on the compression manner, the AI model used to decode the N pieces of compressed information. For another example, the decoder provides the encoder with the compression manner, and the encoder may determine, based on the compression manner, the AI model used to compress the channel information of the M layers.

220: The encoder sends the N pieces of compressed information to the decoder.

Correspondingly, the decoder receives the N pieces of compressed information.

Optionally, the method 200 further includes step 230.

230: The decoder decodes the N pieces of compressed information to obtain the channel information of the M layers.

Based on embodiments of this application, the encoder compresses the channel information of the M layers by using the at least two AI models, to obtain the N pieces of compressed information, and sends the N pieces of compressed information to the decoder, so that the decoder can perform decoding based on the N pieces of compressed information to restore the channel information of the M layers. In this way, channel information of a plurality of layers may be fed back by using an AI network. In comparison with a conventional manner, this can reduce overheads caused by feeding back the channel information. In addition, the N pieces of compressed information are obtained based on the channel information of the M layers, and N is less than M. In other words, joint compression is performed on channel information of at least two layers in the channel information of the M layers. In comparison with separate compression on channel information of each layer, this can further reduce feedback overheads by using a relationship between different channel information between the layers. In addition, N is greater than 1. In comparison with joint compression on the channel information of the M layers for one time, this can reduce computational complexity.

Optionally, the method 200 further includes: The encoder and the decoder learn of the compression manner of the channel information of the M layers. In this way, the encoder may compress the channel information of the M layers based on the compression manner of the channel information of the M layers, to obtain the N pieces of compressed information. The decoder may decode the N pieces of compressed information based on the compression manner of the channel information of the M layers, to obtain the channel information of the M layers. The following describes several possible solutions.

Solution 1: The encoder determines the compression manner of the channel information of the M layers.

Based on this solution, the encoder may determine the compression manner of the channel information of the M layers, may further compress the channel information of the M layers based on a compression manner that is determined by the encoder and that is of the channel information of the M layers, to obtain the N pieces of compressed information, and send the N pieces of compressed information to the decoder. According to this solution, the encoder may dynamically select a proper compression manner based on an actual communication status, and the manner is flexible.

Optionally, in the solution 1, the encoder sends the compression manner of the channel information of the M layers to the decoder. In this way, the decoder obtains the channel information of the M layers through decoding based on the compression manner of the channel information of the M layers and the received N pieces of compressed information.

A procedure applicable to the solution 1 is described in detail in the following with reference to a method 700.

Solution 2: The decoder determines the compression manner of the channel information of the M layers.

Based on this solution, the decoder may determine the compression manner of the channel information of the M layers, and may further obtain the channel information of the M layers through decoding based on the compression manner of the channel information of the M layers that is determined by the decoder and the received N pieces of compressed information. According to this solution, the decoder may dynamically select a proper compression manner based on an actual communication status, and the manner is flexible.

Optionally, in the solution 2, the decoder sends the compression manner of the channel information of the M layers to the encoder. In this way, the encoder may compress the channel information of the M layers based on the compression manner that is of the channel information of the M layers and that is indicated by the network device, to obtain the N pieces of compressed information, and send the N pieces of compressed information to the decoder.

A procedure applicable to the solution 2 is described in detail in the following with reference to a method 1000.

Solution 3: An another apparatus determines the compression manner of the channel information of the M layers.

Based on this solution, the another apparatus may determine the compression manner of the channel information of the M layers. According to this solution, the another apparatus may determine the compression manner of the channel information of the M layers. This reduces overheads caused by determining the compression manner of the channel information of the M layers by the encoder and the decoder.

In the solution 3, the another apparatus may send the compression manner of the channel information of the M layers to the decoder and/or the encoder. For example, the another apparatus separately sends the compression manner of the channel information of the M layers to the decoder and the encoder. For another example, the another apparatus sends the compression manner of the channel information of the M layers to the decoder. After receiving the compression manner of the channel information of the M layers, the decoder sends the compression manner of the channel information of the M layers to the encoder. For another example, the another apparatus sends the compression manner of the channel information of the M layers to the encoder. After receiving the compression manner of the channel information of the M layers, the encoder sends the compression manner of the channel information of the M layers to the decoder.

Solution 4: Predefinition. For example, the compression manner of the channel information of the M layers is predefined in a standard.

Based on this solution, the encoder and the decoder may determine the compression manner of the channel information of the M layers based on the predefinition. According to this solution, the encoder and the decoder may directly determine the compression manner of the channel information of the M layers based on the predefinition. This reduces signaling overheads caused by notifying the encoder and the decoder of the compression manner of the channel information of the M layers.

Optionally, the compression manner of the channel information of the M layers is determined based on at least one of the following: capability information of the encoder, capability information of the decoder, performance of performing joint compression on channel information of a part of layers in the channel information of the M layers, performance of performing separate compression on channel information of a part of layers in the channel information of the M layers, and a value of M.

In an example, the capability information of the encoder may include at least one of the following: a computing resource of the encoder and an AI model of the encoder. In an example, the capability information of the decoder may include at least one of the following: a computing resource of the decoder and an AI model of the decoder. It may be understood that the "capability information" herein is merely used for brevity, and a name of the "capability information" does not limit the protection scope of embodiments of this application.

In a possible case, the foregoing solution 1 is used as an example. The encoder determines the compression manner of the channel information of the M layers. In this case, the encoder may determine the compression manner of the channel information of the M layers based on the capability information of the encoder and/or the capability information of the decoder. In an example, the decoder sends the capability information of the decoder to the encoder. In another example, the encoder may estimate the capability information of the decoder based on a historical communication status between the encoder and the decoder, for example, estimate the computing resource of the decoder and/or the AI model of the decoder.

In another possible case, the foregoing solution 2 is used as an example. The decoder determines the compression manner of the channel information of the M layers. In this case, the decoder may determine the compression manner of the channel information of the M layers based on the capability information of the encoder and/or the capability information of the decoder. In an example, the encoder sends the capability information of the encoder to the decoder. In another example, the decoder may estimate the capability information of the encoder based on a historical communication status between the decoder and the encoder, for example, estimate the computing resource of the encoder and/or the AI model of the encoder.

The following describes several examples of determining the compression manner of the channel information of the M layers. It may be understood that the following apparatus for determining the compression manner of the channel information of the M layers may be an encoder (that is, the foregoing solution 1), may be a decoder (that is, the foregoing solution 2), or may be another apparatus (that is, the foregoing solution 3). This is not limited.

Example 1: The compression manner of the channel information of the M layers is determined based on the computing resource of the encoder.

The computing resource of the encoder may represent available computing power of the encoder for compressing the channel information. In an example, the computing resource of the encoder is determined by the encoder based on a configuration status of the computing resource (for example, a software resource or a hardware resource) of the encoder, or the computing resource of the encoder is determined by the encoder based on an available computing resource of the encoder. The available computing resource of the encoder may be determined by the encoder based on the available computing resource of the encoder when the encoder compresses the channel information.

For example, if the computing resource of the encoder is large, for example, the available computing power used by the encoder to compress the channel information is greater than or equal to a preset value, the compression manner of the channel information of the M layers may include the joint compression. For example, the channel information of the M layers is divided into N groups of channel information, joint compression is separately performed on a part of groups of channel information, and separate compression is performed on the other groups of channel information. For another example, if the available computing power used by the encoder to compress the channel information is less than the preset value, separate compression may be performed on the channel information of each layer.

Example 2: The compression manner of the channel information of the M layers is determined based on the computing resource of the decoder.

For the computing resource of the decoder, refer to the foregoing description of the computing resource of the encoder. Details are not described herein again.

For example, if the computing resource of the decoder is large, for example, available computing power used by the decoder to compress the channel information is greater than or equal to a preset value, the compression manner of the channel information of the M layers may include the joint compression. For example, the channel information of the M layers is evenly divided into N groups of channel information, and joint compression is performed on each group of channel information.

Example 3: The compression manner of the channel information of the M layers is determined based on the AI model of the encoder.

For example, if the AI model of the encoder is applicable to the joint compression (for example, an AI model applicable to the separate compression is being updated), the compression manner of the channel information of the M layers may be the joint compression. If the AI model of the encoder is applicable to the separate compression (for example, the AI model applicable to the joint compression is being updated), the compression manner of the channel information of the M layers may be the separate compression.

Example 4: The compression manner of the channel information of the M layers is determined based on the AI model of the decoder.

For example, if the AI model of the decoder is applicable to decoding of the joint compression, the compression manner of the channel information of the M layers may include the joint compression. If the AI model of the decoder is applicable to decoding of the separate compression, the compression manner of the channel information of the M layers may include the separate compression.

Example 5: The compression manner of the channel information of the M layers is determined based on the performance of performing joint compression on channel information of a part of layers in the channel information of the M layers.

For example, if the performance of performing joint compression on channel information of a part of layers in the channel information of the M layers is greater than or equal to a preset value, the compression manner of the channel information of the M layers may include the joint compression. For another example, the channel information of the M layers is divided into N groups of channel information. The encoder separately performs joint encoding on channel information obtained when N is 1, 2, ..., or M-1, and determines performance of the joint compression. The encoder determines a value of N when the performance is optimal, to perform joint compression on the N groups of channel information.

Example 6: The compression manner of the channel information of the M layers is determined based on the performance of performing separate compression on channel information of a part of layers in the channel information of the M layers.

For example, if the performance of performing separate compression on channel information of a part of layers in the channel information of the M layers is greater than or equal to the preset value, the compression manner of the channel information of the M layers may include the separate compression. For another example, the encoder separately performs separate encoding on channel information of one layer, channel information of two layers, ..., and channel information of M layers, and determines performance of the separate compression. The encoder determines a value of M when the performance is optimal (for example, M=M1), to perform separate compression on channel information of the M1 layers, and perform joint compression on remaining channel information.

Example 7: The compression manner of the channel information of the M layers is determined based on the value of M.

For example, if M is greater than 1, the compression manner of the channel information of the M layers includes joint compression, and joint compression is performed on channel information of which layers and separate compression is performed on channel information of which layers may be randomly selected.

For another example, if M is greater than 1 and less than or equal to a first preset value, the compression manner of the channel information of the M layers is the separate compression; or if M is greater than the first preset value, the compression manner of the channel information of the M layers includes joint compression, and joint compression is performed on channel information of which layers and separate compression is performed on channel information of which layers may be randomly selected

The foregoing describes that the compression manner is determined based on any one of the foregoing information. It may be understood that the foregoing information may also be used in combination. The following briefly lists an example in which the foregoing information is used in combination. Other examples in which the foregoing information is used in combination are not described herein again.

Example 8: The compression manner of the channel information of the M layers is determined based on the computing resource of the decoder and the AI model of the encoder.

For example, if the computing resource of the decoder is large, for example, available computing power used by the decoder to compress the channel information is greater than or equal to a preset value, and the AI model of the encoder is applicable to the joint compression, the compression manner of the channel information of the M layers may include the joint compression.

Optionally, the method 200 further includes: The encoder and the decoder learn of an arrangement manner of channel information of each layer and between layers in X layers, and X is an integer greater than 1 and less than M. In this way, the encoder may compress channel information of the X layers based on the arrangement manner of the channel information of each layer and between the layers in the X layers, to obtain one piece of compressed information (for example, denoted as first compressed information). The decoder may decode the first compressed information, and correctly parse an output of the decoder based on the arrangement manner of the channel information of each layer and between the layers in the X layers, to obtain the channel information of the X layers. For example, the decoder may input the first compressed information to an AI model, and parse, based on the arrangement manner of the channel information of each layer and between the layers in the X layers, information output from the AI model, to obtain the channel information of the X layers.

Generally, the output of the decoder includes

$N_{sub} \times M$ columns, and each column is a complex vector with a length of $N_t$, and represents a channel eigenvector. The channel eigenvector may be used for precoding after being fed back to the decoder. The channel eigenvector may also be referred to as a precoding vector, and a plurality of precoding vectors may form a precoding matrix. $N_t$ represents a quantity of transmit antenna ports of the decoder, $N_{sub}$ represents a quantity of subbands, and M represents a quantity of layers.

To correctly parse the output of the decoder, a physical meaning corresponding to each element in the output of the decoder needs to be clarified, that is, an antenna port corresponding to the element, a subband corresponding to the element, and a layer corresponding to the element, namely, an arrangement manner of channel information of each layer and between layers in the M layers.

The arrangement manner of the channel information of each layer and between the layers in the X layers indicates a physical meaning corresponding to each element output by the decoder after the decoder decodes the compressed information, for example, an antenna port corresponding to the element, a subband corresponding to the element, and a layer corresponding to the element. It is assumed that the channel information of the M layers is divided into N groups of channel information, and joint compression is used for N1 groups of channel information in the N groups of channel information. For each group of channel information in the N1 groups of channel information, an arrangement manner of channel information of each layer and between layers may be the same, or may be different. This is not limited. The following describes a related solution by using the arrangement manner of the channel information of each layer and between the layers in the X layers.

In a possible arrangement manner, the arrangement manner of the channel information of each layer and between the layers in the X layers is a layer-before-subband arrangement manner, that is, channel information of different layers in a same subband is adjacently arranged.

For example, the encoder may perform joint compression on the channel information of the X layers based on the arrangement manner to obtain one piece of compressed information (for example, denoted as first compressed information), that is, an arrangement manner that is of the channel information of the X layers and that is input by the encoder is the layer-before-subband arrangement manner. Correspondingly, the decoder may decode the first compressed information based on the arrangement manner, that is, an arrangement manner that is of the channel information of the X layers and that is output by the decoder is the layer-before-subband arrangement manner.

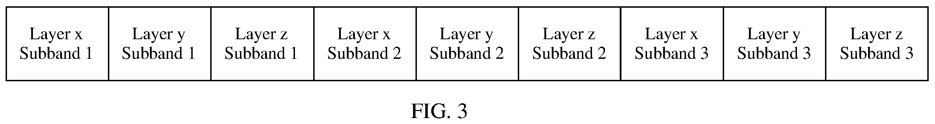

FIG. 3 is a diagram of the arrangement manner of the channel information of each layer and between the layers in the X layers. As shown in FIG. 3, it is assumed that the X layers are three layers, which are respectively denoted as a layer x, a layer y, and a layer z, and the channel information of the X layers respectively corresponds to three subbands (subbands), which are respectively denoted as a subband 1, a subband 2, and a subband 3. As shown in FIG. 3, an arrangement manner output by the decoder is the layer-before-subband arrangement manner. To be specific, eigenvectors at different layers in a same subband are first adjacently arranged to form an eigenvector group of the subband, and then eigenvector groups of different subbands are sequentially arranged.

In another possible arrangement manner, the arrangement manner of the channel information of each layer and between the layers in the X layers is a subband-before-layer arrangement manner, that is, channel information of different subbands at a same layer is adjacently arranged.

For example, the encoder may perform joint compression on the channel information of the X layers based on the arrangement manner to obtain one piece of compressed information (for example, denoted as first compressed information), that is, an arrangement manner that is of the channel information of the X layers and that is input by the encoder is the subband-before-layer arrangement manner. Correspondingly, the decoder may decode the first compressed information based on the arrangement manner, that is, an arrangement manner that is of the channel information of the X layers and that is output by the decoder is the subband-before-layer arrangement manner.

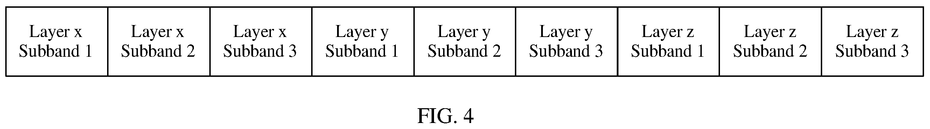

FIG. 4 is another diagram of the arrangement manner of the channel information of each layer and between the layers in the X layers. As shown in FIG. 4, it is assumed that the X layers are three layers, which are respectively denoted as a layer x, a layer y, and a layer z, and the channel information of the X layers respectively corresponds to three subbands, which are respectively denoted as a subband 1, a subband 2, and a subband 3. As shown in FIG. 4, an arrangement manner output by the decoder is the subband-before-layer arrangement manner. To be specific, eigenvectors of different subbands at a same layer are first adjacently arranged to form an eigenvector group of the layer, and then eigenvector groups of different layers are sequentially arranged.

The foregoing two arrangement manners are examples for description, and embodiments of this application are not limited thereto. For example, an arrangement manner of antenna ports at each layer and between layers may alternatively be used.

The encoder and the decoder may learn of the arrangement manner of the channel information of each layer and between the layers in the X layers in the following manners.

Manner 1: The encoder determines the arrangement manner of the channel information of each layer and between the layers in the X layers.

Based on this manner, the encoder may determine the arrangement manner of the channel information of each layer and between the layers in the X layers, and may further perform joint compression on the channel information of the X layers based on the arrangement manner determined by the encoder, to obtain one piece of compressed information, and send the compressed information to the decoder.

Optionally, in the manner 1, the encoder sends the arrangement manner of the channel information of each layer and between the layers in the X layers to the decoder. In this way, the decoder can obtain the channel information of the X layers by decoding based on the arrangement manner of the channel information of each layer and between the layers in the X layers and the received compressed information. Further, optionally, the encoder sends an index value to the decoder, and the index value indicates the arrangement manner of the channel information of each layer and between the layers in the X layers. For example, there is a correspondence between the index value and the arrangement manner of the channel information of each layer and between the layers in the X layers. Therefore, the encoder sends the index value to the decoder, and the decoder may determine, based on the index value and the correspondence between the index value and the arrangement manner of the channel information of each layer and between the layers in the X layers, an arrangement manner corresponding to the index value. For example, the layer-before-subband arrangement manner corresponds to a first index value, and the subband-before-subband arrangement manner corresponds to a second index value. In this case, if the arrangement manner is the layer-before-subband arrangement manner, the encoder sends the first index value to the decoder. If the arrangement manner is the subband-before-subband arrangement manner, the encoder sends the second index value to the decoder.

Manner 2: The decoder determines the arrangement manner of the channel information of each layer and between the layers in the X layers.

Based on this manner, the decoder may determine the arrangement manner of the channel information of each layer and between the layers in the X layers, and may further obtain the channel information of the X layers by decoding based on the arrangement manner determined by the decoder and the received compressed information.

Optionally, in the manner 2, the decoder sends the arrangement manner of the channel information of each layer and between the layers in the X layers to the encoder. In this way, the encoder may perform joint compression on the channel information of the X layers based on the arrangement manner that is of the channel information of each layer and between the layers in the X layers and that is indicated by a network device, to obtain one piece of compressed information, and send the compressed information to the decoder. Further, optionally, the decoder sends an index value to the encoder, and the index value indicates the arrangement manner of the channel information of each layer and between the layers in the X layers. For details, refer to the descriptions of Manner 1. Details are not described herein again.

Manner 3: An another apparatus determines the arrangement manner of the channel information of each layer and between the layers in the X layers.

Based on this manner, the another apparatus may determine the arrangement manner of the channel information of each layer and between the layers in the X layers. Based on this manner, the another apparatus may determine the arrangement manner of the channel information of each layer and between the layers in the X layers.

In the manner 3, the another apparatus may send the arrangement manner of the channel information of each layer and between the layers in the X layers to the decoder and/or the encoder. For example, another apparatus separately sends the arrangement manner of the channel information of each layer and between the layers in the X layers to the decoder and the encoder. For another example, the another apparatus sends the arrangement manner of the channel information of each layer and between the layers in the X layers to the decoder. After receiving the arrangement manner of the channel information of each layer and between the layers in the X layers, the decoder sends the arrangement manner of the channel information of each layer and between the layers in the X layers to the encoder. For another example, the another apparatus sends the arrangement manner of the channel information of each layer and between the layers in the X layers to the encoder. After receiving the arrangement manner of the channel information of each layer and between the layers in the X layers, the encoder sends the arrangement manner of the channel information of each layer and between the layers in the X layers to the decoder. Further, optionally, the another apparatus may send an index value to the decoder and/or the encoder, and the index value indicates the arrangement manner of the channel information of each layer and between the layers in the X layers. For details, refer to the descriptions of Manner 1. Details are not described herein again.

Manner 4: Predefinition. For example, the arrangement manner of the channel information of each layer and between the layers in the X layers is predefined in a standard.

Based on this manner, the encoder and the decoder may determine the arrangement manner of the channel information of each layer and between the layers in the X layers based on the predefinition. In this manner, the encoder and the decoder may directly determine the arrangement manner of the channel information of each layer and between the layers in the X layers based on the predefinition.

Optionally, the encoder may determine an AI model based on the arrangement manner of the channel information of each layer and between the layers in the X layers.

The encoder may calculate, based on an arrangement manner of channel information of each layer and between layers, an indicator like accuracy of feeding back the channel information in a joint compression manner, to determine or update an AI model used for the joint compression.

For example, to calculate the accuracy of feeding back the channel information in the joint compression manner, the encoder may input the channel information to the encoder to obtain compressed information. Then, the encoder inputs the compressed information to a reference decoder to obtain an output result, parses the output result of the reference decoder based on the arrangement manner of the channel information of each layer and between the layers in the X layers to restore channel eigenvectors of the X layers, and compares the channel eigenvectors with accurate channel eigenvectors (that is, channel eigenvectors corresponding to the channel information input by the encoder), to estimate the accuracy of feeding back the channel information in the joint compression manner. The reference decoder may represent a decoder known on the encoder side, and functions implemented by the reference decoder may be basically the same as those implemented by the decoder on the decoder side.

Optionally, the method 200 further includes: The encoder and the decoder learn of a sequence of channel information of different layers during joint compression performed on channel information of a part of the M layers. In this way, the encoder may compress the jointly compressed channel information based on the sequence of the channel information of different layers during the joint compression; and the decoder may correctly parse the output of the decoder based on the sequence of the channel information of different layers during the joint compression.

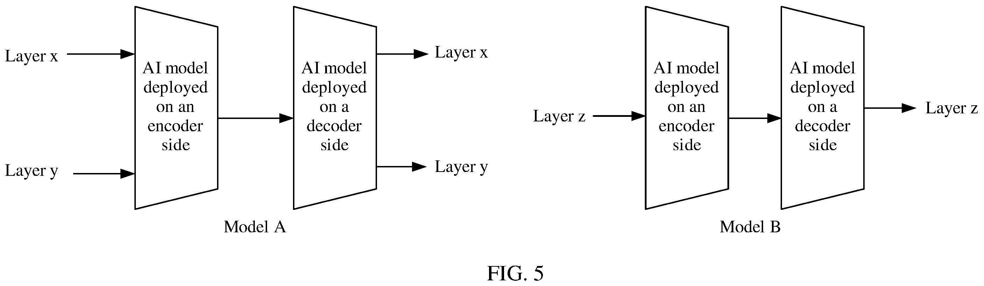

For example, it is assumed that M=3, the compression manner of the channel information of the M layers is represented as [layer 1, layer 2], and [layer 3], which indicates that joint compression is performed on channel information of a first layer and a second layer in a first set, and separate compression is performed on channel information of a third layer in a second set. For example, the encoder may perform joint compression, by using a model A in FIG. 5, the channel information corresponding to the [layer 1, layer 2] set, and the encoder may perform separate compression, by using a model B in FIG. 5, the channel information corresponding to the [layer 3] set.

FIG. 5 is a diagram of encoding and decoding for compressing the channel information of the M layers. As shown in FIG. 5, AI models deployed on an encoder side and a decoder side include two models, for example, a model A and a model B. When the encoder performs joint compression on the channel information of the first layer and the second layer by using the model A in FIG. 5, to correctly parse an output of the decoder, a correspondence between a layer x and a layer y in an output sequence of the model A of the decoder and the layer 1 and the layer 2 needs to be specified. In other words, the decoder needs to learn of a sequence of channel information output by the model A, for example, in the set [layer 1, layer 2], the layer 1 is before the layer 2, and that the layer 1 is before the layer 2 indicates that the layer x corresponds to the layer 1, and the layer y corresponds to the layer 2.

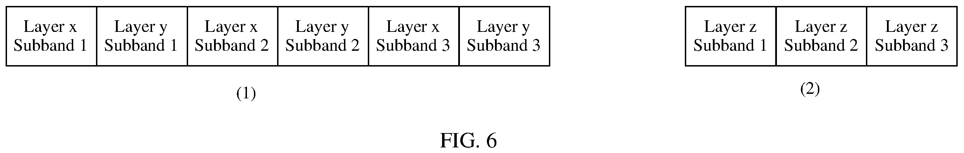

FIG. 6 is a diagram of an output of a decoder. For example, the output of the decoder of the model A is shown in (1) in FIG. 6, and is a layer-before-subband arrangement manner. A sequence of channel information of different layers is that the first layer 1 is before the layer 2, that is, eigenvectors of different layers in a same subband are adjacently arranged in a sequence in which the layer 1 is before the layer 2, to form an eigenvector group of the subband, and then eigenvector groups of different subbands are arranged in sequence. Arrangement of the decoder of the model B is shown in (2) in FIG. 6, that is, eigenvectors of different subbands of one layer are adjacently arranged.

The encoder and the decoder may learn of, in the following several manners, the sequence of the channel information of different layers during the joint compression.

Manner 1: The encoder determines the sequence of the channel information of different layers during the joint compression.

Based on this manner, the encoder may determine the sequence of the channel information of different layers during the joint compression, and may further compress the jointly compressed channel information based on the sequence that is of the channel information of different layers during the joint compression and that is determined by the encoder.

Optionally, in the manner 1, the encoder sends the sequence of the channel information of different layers during the joint compression to the decoder. In this way, the decoder can correctly parse the output of the decoder based on the sequence of the channel information of different layers during the joint compression. Further, optionally, the encoder sends an index value to the decoder, and the index value indicates the sequence of the channel information of different layers during the joint compression. For example, during the joint compression, there is a correspondence between the index value and the sequence of the channel information of different layers. Therefore, the encoder sends the index value to the decoder, and the decoder may determine, based on the index value and the correspondence between the index value and the sequence of the channel information of different layers during the joint compression, a sequence corresponding to the index value.

Manner 2: The decoder determines the sequence of the channel information of different layers during the joint compression.

Based on this manner, the decoder may determine the sequence of the channel information of different layers during the joint compression, and then may correctly parse the output of the decoder based on the sequence that is of the channel information of different layers during the joint compression and that is determined by the decoder.

Optionally, in the manner 2, the decoder sends the sequence of the channel information of different layers during the joint compression to the encoder. In this way, the encoder may compress the jointly compressed channel information based on the sequence that is of the channel information of different layers during the joint compression and that is indicated by the network device. Further, optionally, the decoder sends an index value to the encoder, and the index value indicates the sequence of the channel information of different layers during the joint compression. For details, refer to the descriptions of Manner 1. Details are not described herein again.

Manner 3: Predefinition. For example, the sequence of the channel information of different layers during the joint compression is predefined in a standard.

Based on this manner, the encoder and the decoder may determine the sequence of the channel information of different layers during the joint compression based on the predefinition. In this manner, the encoder and the decoder may directly determine the sequence of the channel information of different layers during the joint compression based on the predefinition.

The foregoing manner is an example for description, and this is not limited. For example, an another apparatus may determine the sequence of the channel information of different layers during the joint compression, and send the sequence of the channel information of different layers during the joint compression to the encoder and/or the decoder.

In addition, if the encoder notifies the decoder of at least two pieces of the following information: the compression manner of the channel information of the M layers, the arrangement manner of the channel information of each layer and between the layers in the X layers, and the sequence of the channel information of different layers during the joint compression, the foregoing information may be carried in same signaling, or may be carried in different signaling. This is not limited. Similarly, if the decoder notifies the encoder of at least two of the following information: the compression manner of the channel information of the M layers, the arrangement manner of the channel information of each layer and between the layers in the X layers, and the sequence of the channel information of different layers during the joint compression, the foregoing information may be carried in same signaling, or may be carried in different signaling. This is not limited.

For ease of understanding, the following uses an example in which the encoder is a terminal device and the decoder is a network device for description with reference to different procedures. For brevity, the compression manner of the channel information of the M layers is referred to as a compression manner of the M layers for short in the following, and the arrangement manner of the channel information of each layer and between the layers in the X layers is referred to as an arrangement manner for short in the following.

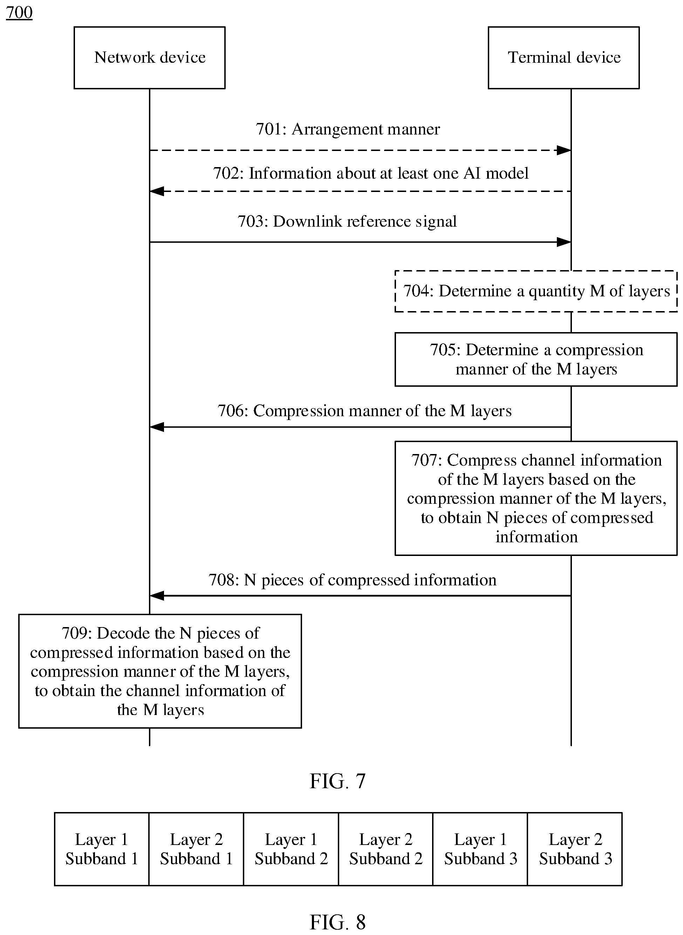

First, a possible procedure applicable to the solution 1 is described with reference to FIG. 7.

FIG. 7 is a diagram of a communication method 700 according to an embodiment of this application. As shown in FIG. 7, the method 700 is described by using interaction between a terminal device and a network device as an example. The method 700 shown in FIG. 7 is applicable to a diagram of determining a compression manner by the terminal device according to an embodiment of this application. The method 700 shown in FIG. 7 may include the following steps.

Optionally, the method 700 includes step 701: The network device sends an arrangement manner to the terminal device.

In step 701, the network device may send the arrangement manner to the terminal device. In this way, if the terminal device needs to perform joint compression on channel information of at least two layers, the terminal device may perform joint compression based on the arrangement manner indicated by the network device.

It may be understood that an example in which the network device sends the arrangement manner to the terminal device is used for description herein. As described in the embodiment in FIG. 2, the terminal device may alternatively determine the arrangement manner, or the arrangement manner may be predefined.

For the arrangement manner, refer to the description of the embodiment in FIG. 2. Details are not described herein again.

Optionally, the method 700 includes step 702: The terminal device sends information about at least one AI model to the network device.

The terminal device sends the information about the at least one AI model to the network device, so that the network device can process information from the terminal device by using an AI model corresponding to the at least one AI model. For example, the terminal device compresses channel information by using the at least one AI model, and sends the compressed channel information to the network device. The network device may decode the compressed channel information by using the AI model corresponding to the at least one AI model.

For example, the terminal device sends the at least one AI model to the network device, for example, in a form of AI model list. For another example, the terminal device sends an identifier of the at least one AI model to the network device, and a corresponding AI model may be learnt of based on the identifier. The at least one AI model may be all AI models deployed on the terminal device, or may be a part of AI models in all the AI models of the terminal device. The part of AI models may be AI models available on the terminal device side. This is not limited.

Optionally, the terminal device monitors performance of the AI model deployed on the terminal device. For example, the terminal device monitors, in a model monitoring stage (for example, within a preset time period), the performance of the AI model deployed on the terminal device. For example, if the terminal device finds, in the model monitoring stage, that performance of an AI model decreases to be lower than a threshold, the terminal device may update the AI model. Before the AI model is updated, the AI model is temporarily unavailable. Optionally, the terminal device may determine or update the AI model based on the arrangement manner received in step 701. For details, refer to related descriptions of the method 200. Details are not described herein again.

In a possible implementation, the terminal device may periodically send at least one AI model to the network device. Alternatively, in another possible implementation, when a preset condition is met, the terminal device sends the at least one AI model to the network device. For example, the preset condition may be that the AI model of the terminal device is updated, or the preset condition may be that the terminal device receives the arrangement manner sent by the network device.

703: The network device sends a downlink reference signal to the terminal device.

The downlink reference signal may be, for example, a channel status information reference signal (channel status information reference signal, CSI-RS).

The terminal device receives the downlink reference signal, and then the terminal device may perform channel estimation based on the received downlink reference signal, to obtain a corresponding channel eigenvector.

The following briefly describes a calculation manner of the channel eigenvector. It may be understood that the following manner is merely a possible implementation, and does not limit the protection scope of embodiments of this application.

The terminal device performs channel estimation, and obtains channel information. The terminal device processes the channel information, and dimensions of the channel information are $[N_{tx}, N_{rx}, N_{RB}]$. Herein, $N_{tx}$ represents a quantity of antennas or a quantity of antenna ports at a transmit end, $N_{rx}$ represents a quantity of antennas or a quantity of antenna ports at a receive end, and $N_{RB}$ represents a quantity of frequency domain units, for example, $N_{RB}$ represents a quantity of RBs. An $[N_{tx}, N_{rx}, N_{RB}]$-dimensional original channel is transformed into M pieces of $[N_{tx}, N_{sb}]$-dimensional eigensubspace by using an SVD operation, where M represents a quantity of layers (or referred to as a quantity of streams, or referred to as a quantity of ranks); and $N_{sb}$ represents a quantity of frequency domain units, for example, $N_{sb}$ represents a quantity of frequency domain subbands. A common quantity of frequency domain subbands is one RB, two RBs, or four RBs. For example, 4 RBs are used, and $N_{sb} = N_{RB}/4$. It may be understood that both $N_{RB}$ and $N_{sb}$ represent the quantity of frequency domain units, and $N_{RB}$ and $N_{sb}$ may correspond to different values. As described above, $N_{RB}$ represents the quantity of RBs, and $N_{sb}$ represents the quantity of subbands. The processing at different layers is as follows:

A specific processing process at an $L^{th}$ layer is as follows: Each subband m includes T RBs, and channels of the T RBs are combined to calculate an equivalent channel. It is assumed that a channel of an $i^{th}$ RB is $H_i$, an equivalent channel in the subband is represented as follows:

$$\tilde{R}_{UU} = \sum_{i=0}^{T-1} H_i^H H_i$$

SVD decomposition is performed on $\tilde{R}_{UU}$ to obtain the following:

$$\left[ U \ \lambda \ \tilde{V} \right] = SVD\left( \tilde{R}_{UU} \right)$$

In the foregoing formula, dimensions of each $H_i$ are $(N_{tx}, N_{rx})$, dimensions of $\tilde{R}_{UU}$ are $(N_{tx}, N_{tx})$, a channel eigenvector value of an $m^{th}$ subband at the $L^{th}$ layer is an $L^{th}$ column of $\tilde{V}$, and dimensions of the subband are $(N_{tx}, 1)$, that is, an eigenvector of the $m^{th}$ subband at the $L^{th}$ layer is $V_m^L = \tilde{V}(:, L)$. Herein, $\tilde{V}(:, L)$ represents an $L^{th}$ column whose value is $\tilde{V}$. It may be understood that the colon ":" herein is merely a possible expression manner, and any representation manner that can represent the $L^{th}$ column of $\tilde{V}$ is applicable to this embodiment of this application.

A channel eigenvector corresponding to each layer may be obtained by performing the foregoing operations.

Optionally, the method 700 includes step 704: The terminal device determines a quantity M of layers.

In this way, when determining the compression manner of the M layers, the terminal device may further refer to the quantity M of layers.

After receiving the downlink reference signal, the terminal device may determine the quantity of layers based on a result of the channel estimation. For example, the terminal device may determine, based on the result of the channel estimation and some communication parameters (for example, a signal-to-interference-plus-noise ratio), the quantity of layers suitable for the terminal device. It is assumed that the quantity of layers determined by the terminal device is M, and M is an integer greater than 1.

705: The terminal device determines the compression manner of the M layers.

The terminal device may determine the compression manner of the M layers based on at least one of the following: capability information of the terminal device, capability information of the network device, performance of performing joint compression on channel information of a part of layers in the channel information of the M layers, performance of performing separate compression on channel information of a part of layers in the channel information of the M layers, and a value of M. The capability information of the network device may be sent by the network device to the terminal device, for example, sent to the terminal device together with the arrangement manner in step 701 (that is, the capability information of the network device and the arrangement manner are carried in one piece of signaling), or separately sent to the terminal device. Alternatively, the capability information of the network device may be estimated by the terminal device, for example, estimated based on a historical communication status. For a specific determining manner, refer to the related description of the foregoing method 200. Details are not described herein again.

The compression manner of the M layers may be represented by using a set. For example, it is assumed that M=3. For example, the compression manner of the M layers may be [layer 1], [layer 2], and [layer 3], that is, separate compression is performed on channel eigenvectors of different layers. For another example, the compression manner of the M layers may be [layer 1, layer 2], and [layer 3], that is, joint compression is performed on channel eigenvectors of a first layer and a second layer, and separate compression is performed on a channel eigenvector of a third layer. For another example, the compression manner of the M layers may be [layer 1, layer 2, layer 3], that is, joint compression is performed on channel eigenvectors of the three layers.

706: The terminal device sends the compression manner of the M layers to the network device.

The terminal device feeds back the compression manner of the M layers to the network device, so that the network device may select, based on the compression manner of the M layers, a corresponding AI model for decoding.

Optionally, the terminal device further sends the value of M to the network device. For example, if the method 700 includes step 704, the terminal device further sends the value of M to the network device. The compression manner of the M layers and the value of M may be carried in same signaling, or may be carried in different signaling. This is not limited.

Optionally, the terminal device further sends a sequence of channel information of different layers during the joint compression to the network device. During the joint compression, the sequence of the channel information of different layers and one or more of the compression manner of the M layers and the value of M may be carried in same signaling, or may be carried in different signaling. This is not limited.

707: The terminal device compresses the channel information of the M layers based on the compression manner of the M layers, to obtain N pieces of compressed information.

For example, the compression manner of the M layers that is determined by the terminal device is [layer 1, layer 2], and [layer 3]. Therefore, the terminal device may perform joint compression on the channel eigenvectors of the first layer and the second layer by using the model A in FIG. 5, and the terminal device performs separate compression on the channel eigenvector of the third layer by using the model B in FIG. 5, to obtain two pieces of compressed information. One piece of compressed information corresponds to joint compression information of the channel eigenvectors of the first layer and the second layer, and the other piece of compressed information corresponds to compression information of the channel eigenvector of the third layer.

In addition, the terminal device may perform compression based on the arrangement manner received in step 701 and the sequence of the channel information of different layers. For example, if the arrangement manner is a layer-before-subband arrangement manner, the sequence of the channel information of different layers is a sequence in which the layer 1 is before the layer 2, that is, eigenvectors of different layers in a same subband are adjacently arranged in the sequence in which the layer 1 is before the layer 2. In this case, an arrangement manner of the channel eigenvectors that may be input to the AI model by the terminal device and that are of the first layer and the second layer is the layer-before-subband arrangement manner, and eigenvectors of different layers in a same subband are adjacently arranged in a sequence in which the layer 1 is before the layer 2. For another example, if the arrangement manner is a subband-before-layer arrangement manner, the sequence of the channel information of different layers is a sequence in which the layer 1 is before the layer 2, that is, eigenvectors of different subbands at a same layer are adjacently arranged, and different layers are arranged in the sequence in which the layer 1 is before the layer 2. In this case, the arrangement manner of the channel eigenvectors that may be input to the AI model by the terminal device and that are of the first layer and the second layer is the subband-before-layer arrangement manner, and different layers are arranged in the sequence in which the layer 1 is before the layer 2. The sequence of the channel information of different layers may be indicated by the network device (for example, indicated in step 701, or separately indicated), or may be determined by the terminal device, or may be predefined. For details, refer to related descriptions of the method 200. Details are not described herein again.

708: The terminal device sends the N pieces of compressed information to the network device.

709: The network device decodes the N pieces of compressed information based on the compression manner of the M layers, to obtain the channel information of the M layers.

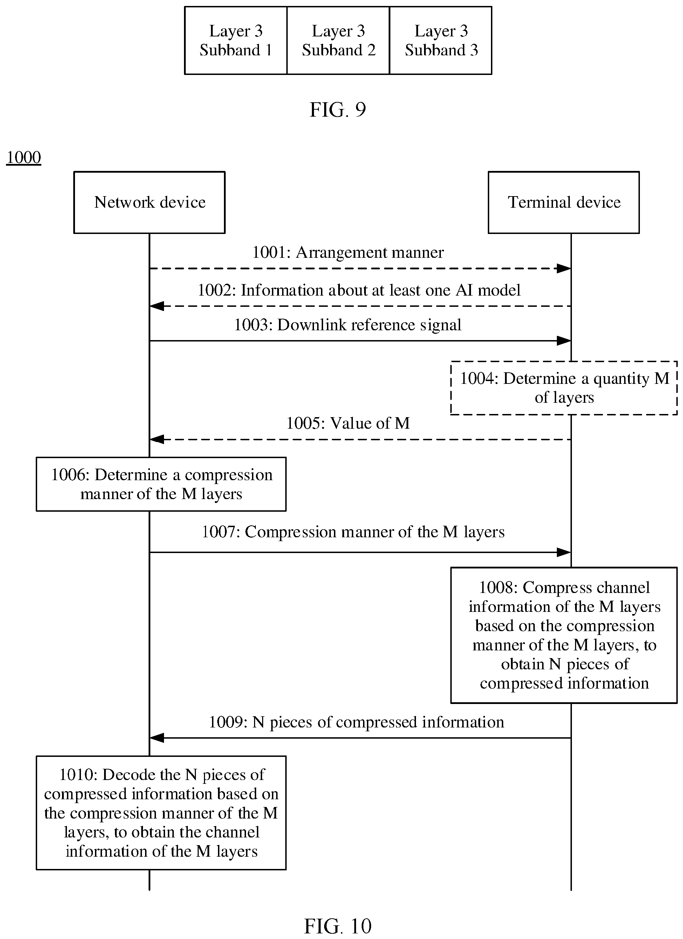

The foregoing example is still used as an example. It is assumed that the compression manner of the M layers is [layer 1, layer 2], and [layer 3], the network device may learn that the terminal device sends two pieces of compressed information, which are respectively denoted as c1 and c2. In addition, the network device may learn that c1 corresponds to the joint compression information of [layer 1, layer 2], and therefore may perform decoding by using a decoder (for example, the model A in FIG. 5) for two layers; and learn that c2 corresponds to the compression information of [layer 3], and therefore may perform decoding by using a decoder (for example, the model B in FIG. 5) for a single layer. In addition, the network device may learn, based on the sequence of the channel information of different layers during the joint compression and an arrangement manner of outputs of decoders of the model A and the model B, that channel information shown in FIG. 8 is obtained by inputting c1 to the model A, and channel information shown in FIG. 9 is obtained by inputting c2 to the model B.

The foregoing describes, with reference to steps 701 to 709 shown in FIG. 7, an example of a procedure in which the terminal device determines the compression manner. It should be understood that the foregoing steps are merely examples for description, and are not strictly limited. In addition, sequence numbers of the foregoing processes do not mean a sequence of execution. The sequence of execution of the processes should be determined based on functions and internal logic of the processes, and should not constitute any limitation on implementation processes of embodiments of this application. For example, step 701 and step 706 may be simultaneously performed. To be specific, the terminal device sends the arrangement manner, the compression manner of the M layers, and the value of M to the network device. In addition, one or more of the arrangement manner, the compression manner of the M layers, and the value of M may be carried in same signaling, or may be carried in different signaling. This is not limited.

In addition, for example, steps 701 and 702 may be considered as model deployment stages or model monitoring stages, and steps 703 to 709 may be considered as model inference stages or model running stages.

Based on the foregoing technical solution, the terminal device may determine the compression manner of the M layers, for example, dynamically select an appropriate compression manner based on computing power of the terminal device, an available AI model, and the like. The terminal device may perform compression based on the arrangement manner indicated by the network device, the compression manner determined by the terminal device, and the sequence of the channel information of different layers. The decoder performs decoding based on the arrangement manner, the compression manner, and the sequence of the channel information of different layers, so that an AI model used for decoding on the network device side can be aligned with an AI model used for compression on the terminal device side, and the network device side can correctly parse the output of the AI model used for decoding.

The following describes, with reference to FIG. 10, a possible procedure applicable to the solution 2.

FIG. 10 is a diagram of a communication method 1000 according to an embodiment of this application. As shown in FIG. 10, the method 1000 is described by using interaction between a terminal device and a network device as an example. The method 1000 shown in FIG. 10 is applicable to a diagram of determining a compression manner by the network device according to an embodiment of this application. The method 1000 shown in FIG. 10 may include the following steps.

Optionally, the method 1000 includes step 1001: The network device sends an arrangement manner to the terminal device.

Optionally, the method 1000 includes step 1002: The terminal device sends information about at least one AI model to the network device.

1003: The network device sends a downlink reference signal to the terminal device.

Optionally, the method 1000 includes step 1004: The terminal device determines a quantity M of layers.

Steps 1001 to 1004 are similar to steps 701 to 704, and details are not described herein again.

Optionally, the method 1000 includes step 1005. The terminal device sends a value of M to the network device.

1006: The network device determines the compression manner of the M layers.

The network device may determine the compression manner of the M layers based on at least one of the following: capability information of the terminal device, capability information of the network device, performance of performing joint compression on channel information of a part of layers in the channel information of the M layers, performance of performing separate compression on channel information of a part of layers in the channel information of the M layers, and a value of M. The capability information of the terminal device may be sent by the terminal device to the network device, for example, may be sent to the network device together with the at least one AI model in step 1002 (that is, the capability information of the terminal device and the at least one AI model are carried in one piece of signaling), or may be sent to the network device together with the quantity of layers in step 1005 (that is, the capability information of the terminal device and the quantity of layers are carried in one piece of signaling), or may be separately sent to the network device. Alternatively, the capability information of the terminal device may be estimated by the network device, for example, estimated based on a historical communication status, or estimated based on information about at least one AI model sent by the terminal device. For a specific determining manner, refer to the related description of the foregoing method 200. Details

1007: The network device sends the compression manner of the M layers to the terminal device.

The compression manner of the M layers may be represented by using a set. For example, it is assumed that M=3. For example, the compression manner of the M layers may be [layer 1], [layer 2], and [layer 3], that is, separate compression is performed on channel eigenvectors of different layers. For another example, the compression manner of the M layers may be [layer 1, layer 2], and [layer 3], that is, joint compression is performed on channel eigenvectors of a first layer and a second layer, and separate compression is performed on a channel eigenvector of a third layer. For another example, the compression manner of the M layers may be [layer 1, layer 2, layer 3], that is, joint compression is performed on channel eigenvectors of the three layers.

1008: The terminal device compresses the channel information of the M layers based on the compression manner of the M layers, to obtain N pieces of compressed information.

The terminal device may compress the channel information of the M layers based on the compression manner of the M layers that is received in step 1007.

Step 1008 is similar to step 707, and details are not described herein again.

1009: The terminal device sends the N pieces of compressed information to the network device.

1010: The network device decodes the N pieces of compressed information based on the compression manner of the M layers, to obtain the channel information of the M layers.

The network device may decode, based on the compression manner of the M layers that is determined by the network device, the N pieces of compressed information received in step 1009.

Step 1010 is similar to step 709, and details are not described herein again.

The foregoing describes, with reference to steps 1001 to 1010 shown in FIG. 10, an example of a procedure in which the network device determines the compression manner. It should be understood that the foregoing steps are merely examples for description, and are not strictly limited. In addition, sequence numbers of the foregoing processes do not mean a sequence of execution. The sequence of execution of the processes should be determined based on functions and internal logic of the processes, and should not constitute any limitation on implementation processes of embodiments of this application. For example, step 1001 and step 1007 may be simultaneously performed, that is, the network device sends the arrangement manner and the compression manner of the M layers to the terminal device. In addition, the arrangement manner and the compression manner of the M layers may be carried in same signaling, or may be carried in different signaling. This is not limited.

In addition, for example, steps 1001 and 1002 may be considered as model deployment stages or model monitoring stages, and steps 1003 to 1010 may be considered as model inference stages or model running stages.

Based on the foregoing technical solution, the network device may determine the compression manner of the M layers, for example, dynamically select an appropriate compression manner based on computing power of the network device, an available AI model, and the like, and indicate the compression manner to the terminal device. The terminal device may perform compression based on the arrangement manner indicated by the network device, the compression manner indicated by the network device, and the sequence of the channel information of different layers. The decoder performs decoding based on the arrangement manner, the compression manner, and the sequence of the channel information of different layers, so that an AI model used for decoding on the network device side can be aligned with an AI model used for compression on the terminal device side, and the network device side can correctly parse an output of the AI model used for decoding.

It may be understood that, in embodiments in FIG. 7 and FIG. 10, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that, in some of the foregoing embodiments, one piece of channel information or at least two pieces of channel information are mentioned. One piece of channel information represents channel information of one layer, that is, the one piece of channel information may also be replaced with channel information of one layer. Similarly, at least two pieces of channel information represent channel information of at least two layers, that is, the at least two pieces of channel information may also be replaced with channel information of at least two layers.

It may be further understood that in some of the foregoing embodiments, an example in which the terminal device provides information about an AI model for the network device is used for description. This is not limited. For example, the terminal device provides a compression manner for the network device, and the network device may determine a corresponding AI model based on the compression manner. Similarly, the terminal device provides the information about the AI model for the network device, and the network device may also know the compression manner based on the information that is about the AI model and that is provided by the terminal device.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that, in the foregoing method embodiments, the methods and operations implemented by the encoder may alternatively be implemented by a component (for example, a chip or a circuit) of the encoder. In addition, the methods and operations implemented by the decoder may alternatively be implemented by a component (for example, a chip or a circuit) of the decoder. This is not limited.

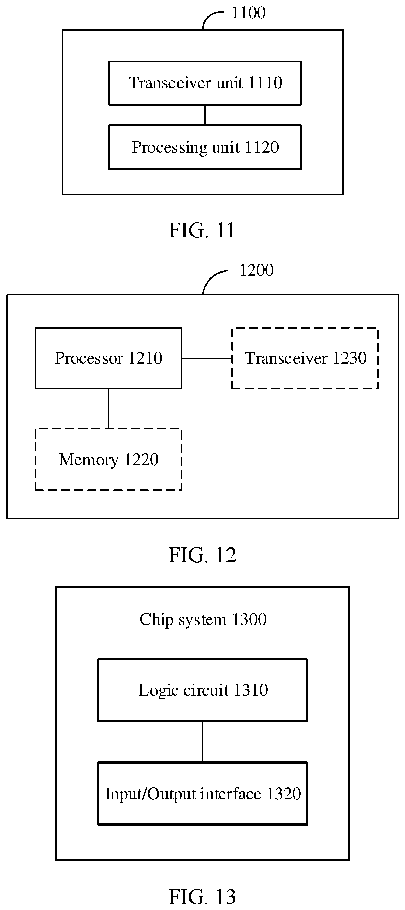

The methods provided in embodiments of this application are described above in detail with reference to FIG. 2 to FIG. 10. The following describes, in detail with reference to FIG. 11 to FIG. 13, the data transmission apparatus in embodiments of this application. It should be understood that descriptions of the apparatus embodiments correspond to descriptions of the method embodiments. Therefore, for content that is not described in detail, refer to the foregoing method embodiments. For brevity, details are not described herein again.

FIG. 11 is a block diagram of a communication apparatus 1100 according to an embodiment of this application. An apparatus 1100 includes a transceiver unit 1110 and a processing unit 1120. The transceiver unit 1110 may be configured to implement a corresponding communication function. The transceiver unit 1110 may also be referred to as a communication interface or a communication unit. The processing unit 1120 may be configured to perform data processing.

Optionally, the apparatus 1100 may further include a storage unit. The storage unit may be configured to store instructions and/or data. The processing unit 1120 may read the instructions and/or the data in the storage unit, to enable the apparatus to implement the foregoing method embodiments.

In a design, the apparatus 1100 is configured to perform the steps or procedures performed by the encoder in the foregoing method embodiments, for example, the steps or procedures performed by the encoder in the embodiment shown in FIG. 2, and the steps or procedures performed by the terminal device in the embodiment shown in FIG. 7 or FIG. 10. The transceiver unit 1110 is configured to perform a transceiver-related operation on the encoder side in the foregoing method embodiments, and the processing unit 1120 is configured to perform a processing-related operation on the encoder side in the foregoing method embodiments.

In a possible implementation, the processing unit 1120 is configured to compress channel information of M layers by using at least two artificial intelligence AI models, to obtain N pieces of compressed information, where each of the N pieces of compressed information is obtained by compressing channel information of a part of layers in the channel information of the M layers by using at least one of the at least two AI models, N and M are integers greater than 1, and N is less than M. The transceiver unit 1110 is configured to send the N pieces of compressed information to a decoder.

For example, the N pieces of compressed information include at least one piece of first compressed information and at least one piece of second compressed information. The first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

In another example, a compression manner of the channel information of the M layers is determined based on at least one of the following information: a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M. The compression manner of the channel information of the M layers includes joint compression, or the compression manner of the channel information of the M layers includes joint compression and separate compression.

In another example, the processing unit 1120 is further configured to determine the compression manner of the channel information of the M layers, where the compression manner of the channel information of the M layers includes joint compression, or the compression manner of the channel information of the M layers includes joint compression and separate compression.

In another example, the transceiver unit 1110 is further configured to send the compression manner of the channel information of the M layers to the decoder.

In another example, the transceiver unit 1110 is further configured to receive the compression manner of the channel information of the M layers, where the compression manner of the channel information of the M layers includes joint compression, or the compression manner of the channel information of the M layers includes joint compression and separate compression.

In another example, the transceiver unit 1110 is further configured to receive a reference signal from the decoder. The processing unit 1120 is further configured to perform channel measurement based on the reference signal, to obtain the channel information of the M layers.

In another example, the processing unit 1120 is further configured to determine the value of M based on a result of the channel measurement.

In another example, the processing unit 1120 is specifically configured to: determine a first AI model based on an arrangement manner of channel information of each layer and between layers in X layers, where the at least two AI models include the first AI model, the M layers include the X layers, and X is an integer greater than 1 and less than M; and perform joint compression on channel information of the X layers by using the first AI model, to obtain the first compressed information, where the N pieces of compressed information include the first compressed information, and the arrangement manner of the channel information of each layer and between the layers in the X layers includes any one of the following: adjacent arrangement of channel information of different subbands at a same layer, and adjacent arrangement of channel information of different layers in a same subband.

In another example, the transceiver unit 1110 is further configured to: receive the arrangement manner of the channel information of each layer and between the layers in the X layers from the decoder; or send the arrangement manner of the channel information of each layer and between the layers in the X layers to the decoder.

In another example, the transceiver unit 1110 is further configured to send first information to the decoder, where the first information indicates a sequence of channel information of different layers during joint compression performed on channel information of at least two layers in the channel information of the M layers.

In another example, the encoder is a terminal device, and the decoder is a network device.

In another design, the apparatus 1100 is configured to perform the steps or procedures performed by the decoder in the foregoing method embodiments, for example, the steps or procedures performed by the decoder in the embodiment shown in FIG. 2, and the steps or procedures performed by the network device in the embodiment shown in FIG. 7 or FIG. 10. The transceiver unit 1110 is configured to perform a transceiver-related operation on the decoder side in the foregoing method embodiments, and the processing unit 1120 is configured to perform a processing-related operation on the decoder side in the foregoing method embodiments.

In a possible implementation, the transceiver unit 1110 is configured to receive N pieces of compressed information from an encoder, where the N pieces of compressed information are obtained by compressing channel information of M layers by using at least two artificial intelligence AI models, each of the N pieces of compressed information is obtained by compressing channel information of a part of layers in the channel information of the M layers by using at least one of the at least two AI models, N and M are integers greater than 1, and N is less than M. The processing unit 1120 is configured to decode the N pieces of compressed information to obtain the channel information of the M layers.

For example, the N pieces of compressed information include at least one piece of first compressed information and at least one piece of second compressed information. The first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

In another example, a compression manner of the channel information of the M layers is determined based on at least one of the following information: a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M. The compression manner of the channel information of the M layers includes joint compression, or the compression manner of the channel information of the M layers includes joint compression and separate compression.

In another example, the processing unit 1120 is specifically configured to decode the N pieces of compressed information based on the compression manner of the channel information of the M layers, where the compression manner of the channel information of the M layers includes joint compression, or the compression manner of the channel information of the M layers includes joint compression and separate compression.

In another example, the processing unit 1120 is further configured to determine the compression manner of the channel information of the M layers.

In another example, the transceiver unit 1110 is further configured to send the compression manner of the channel information of the M layers to the encoder.

In another example, the transceiver unit 1110 is further configured to receive the compression manner of the channel information of the M layers from the encoder.

In another example, the processing unit 1120 is specifically configured to decode the first compressed information based on an arrangement manner of channel information of each layer and between layers in X layers, to obtain channel information of the X layers, where the first compressed information is obtained by performing joint compression on the channel information of the X layers by using the first AI model in the at least two AI models, the N pieces of compressed information include the first compressed information, the M layers include the X layers, and X is an integer greater than 1 and less than M. The arrangement manner of the channel information of each layer and between the layers in the X layers includes any one of the following: adjacent arrangement of channel information of different subbands at a same layer, and adjacent arrangement of channel information of different layers in a same subband.

In another example, the transceiver unit 1110 is further configured to: send the arrangement manner of the channel information of each layer and between the layers in the X layers to the encoder, or receive the arrangement manner of the channel information of each layer and between the layers in the X layers from the encoder.

In another example, the transceiver unit 1110 is further configured to receive first information from the encoder, where the first information indicates a sequence of channel information of different layers during joint compression performed on channel information of at least two layers in the channel information of the M layers.

In another example, the encoder is a terminal device, and the decoder is a network device.

It should be understood that a specific process in which the units perform the foregoing corresponding steps is described in detail in the foregoing method embodiments. For brevity, details are not described herein again.

It should be understood that, the apparatus 1100 herein is presented in a form of function units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1100 may be specifically the first terminal device in the foregoing embodiments, and may be configured to perform the procedures and/or steps corresponding to the first terminal device in the foregoing method embodiments. Alternatively, the apparatus 1100 may be specifically the second terminal device in the foregoing embodiments, and may be configured to perform the procedures and/or steps corresponding to the second terminal device in the foregoing method embodiments. To avoid repetition, details are not described herein again.

The apparatus 1100 in the foregoing solutions has a function of implementing corresponding steps performed by the first terminal device in the foregoing methods, or the apparatus 1100 in the foregoing solutions has a function of implementing corresponding steps performed by the second terminal device in the foregoing methods. The functions may be implemented by hardware, or may be implemented by hardware by executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver). Another unit, such as a processing unit, may be replaced by a processor to separately perform a sending and receiving operation and a related processing operation in each method embodiment.

In addition, the transceiver unit 1110 may alternatively be a transceiver circuit (which may include, for example, a receiving circuit and a sending circuit), and the processing unit may be a processing circuit.

It should be noted that the apparatus in FIG. 11 may be the network element or the device in the foregoing embodiments, or may be a chip or a chip system, for example, a system-on-a-chip (system-on-a-chip, SoC). The transceiver unit may be an input/output circuit and/or a communication interface. The processing unit is an integrated processor, a microprocessor, or an integrated circuit on the chip. This is not limited herein.

FIG. 12 is a diagram of another communication apparatus 1200 according to an embodiment of this application. The apparatus 1200 includes a processor 1210. The processor 1210 is coupled to a memory 1220. The memory 1220 is configured to store a computer program or instructions and/or data. The processor 1210 is configured to execute the computer program or the instructions stored in the memory 1220, or read the data stored in the memory 1220, to perform the methods in the foregoing method embodiments.

Optionally, there are one or more processors 1210.

Optionally, there are one or more memories 1220.

Optionally, the memory 1220 is integrated with the processor 1210, or separately disposed.

Optionally, as shown in FIG. 12, the apparatus 1200 may further include a transceiver 1230. The transceiver 1230 is configured to receive and/or send signals. For example, the processor 1210 is configured to control the transceiver 1230 to receive and/or send the signal.

For example, the processor 1210 may have a function of the processing unit 1120 shown in FIG. 11, the memory 1220 may have a function of the storage unit, and the transceiver 1230 may have a function of the transceiver unit 1110 shown in FIG. 11.

In a solution, the apparatus 1200 is configured to implement operations performed by the encoder in the foregoing method embodiments.

For example, the processor 1210 is configured to execute the computer program or the instructions stored in the memory 1220, to implement related operations of the encoder in the foregoing method embodiments, for example, the method performed by the encoder in the embodiment shown in FIG. 2, or the method performed by the terminal device in the embodiment shown in any one of FIG. 7 or FIG. 10.

In another solution, the apparatus 1200 is configured to implement operations performed by the decoder in the foregoing method embodiments.

For example, the processor 1210 is configured to execute the computer program or the instructions stored in the memory 1220, to implement related operations of the decoder in the foregoing method embodiments, for example, the method performed by the decoder in the embodiment shown in FIG. 2, or the method performed by the network device in the embodiment shown in any one of FIG. 7 or FIG. 10.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but is not limited to these memories and any memory of another appropriate type.

FIG. 13 is a diagram of a chip system 1300 according to an embodiment of this application. The chip system 1300 (or may be referred to as a processing system) includes a logic circuit 1310 and an input/output interface (input/output interface) 1320.

The logic circuit 1310 may be a processing circuit in the chip system 1300. The logic circuit 1310 may be coupled to a storage unit, and invoke instructions from the storage unit, so that the chip system 1300 can implement the methods and functions in embodiments of this application. The input/output interface 1320 may be an input/output circuit in the chip system 1300, and outputs information processed by the chip system 1300, or inputs to-be-processed data or signaling information into the chip system 1300 for processing.

Specifically, for example, if the chip system 1300 is installed in an encoder, and the logic circuit 1310 is coupled to the input/output interface 1320, the logic circuit 1310 may send compressed information to a decoder through the input/output interface 1320, where the compressed information may be obtained by the logic circuit 1310 by compressing channel information. Alternatively, the input/output interface 1320 may input a message from a second terminal device to the logic circuit 1310 for processing. For another example, if the chip system 1300 is installed in the decoder, and the logic circuit 1310 is coupled to the input/output interface 1320, the input/output interface 1320 may input compressed information from the encoder to the logic circuit 1310 for processing.

In a solution, the chip system 1300 is configured to implement operations performed by the encoder in the foregoing method embodiments.

For example, the logic circuit 1310 is configured to implement processing-related operations performed by the encoder in the foregoing method embodiments, for example, the processing-related operations performed by the encoder in the embodiment shown in FIG. 2, or the processing-related operations performed by the terminal device in the embodiment shown in any one of FIG. 7 or FIG. 10. The input/output interface 1320 is configured to implement sending and/or receiving-related operations performed by the encoder in the foregoing method embodiments, for example, the sending and/or receiving-related operations performed by the encoder in the embodiment shown in FIG. 2, or the sending and/or receiving-related operations performed by the terminal device in the embodiment shown in any one of FIG. 7 or FIG. 10.

In another solution, the chip system 1300 is configured to implement operations performed by the decoder in the foregoing method embodiments.

For example, the logic circuit 1310 is configured to implement processing-related operations performed by the decoder in the foregoing method embodiments, for example, the processing-related operations performed by the decoder in the embodiment shown in FIG. 2, or the processing-related operations performed by the network device in the embodiment shown in any one of FIG. 7 or FIG. 10. The input/output interface 1320 is configured to implement sending and/or receiving-related operations performed by the decoder in the foregoing method embodiments, for example, the sending and/or receiving-related operations performed by the decoder in the embodiment shown in FIG. 2, or the sending and/or receiving-related operations performed by the network device in the embodiment shown in any one of FIG. 7 or FIG. 10.

An embodiment of this application further provides a computer-readable storage medium. The computer-readable storage medium stores computer instructions that are used to implement the methods performed by the encoder or the decoder in the foregoing method embodiments.

For example, when a computer program is executed by a computer, the computer is enabled to implement the methods performed by the encoder or the decoder in the foregoing method embodiments.

An embodiment of this application further provides a computer program product, including instructions. When the instructions are executed by a computer, the method performed by the encoder or the decoder in the foregoing method embodiments is implemented.

An embodiment of this application further provides a communication system. The communication system includes the encoder and the decoder in the foregoing embodiments. For example, the system includes the encoder and the decoder in the embodiment shown in FIG. 2. For another example, the system includes the terminal device and the network device in the embodiment shown in FIG. 7 or FIG. 10.

For explanations and beneficial effect of related content of any one of the apparatuses provided above, refer to the corresponding method embodiment provided above. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the foregoing usable medium may include but is not limited to any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   compressing, by an encoder, channel information of M layers by using at least two artificial intelligence AI models, to obtain N pieces of compressed information, wherein each of the N pieces of compressed information is obtained by compressing channel information of a part of layers in the channel information of the M layers by using at least one of the at least two AI models, N and M are integers greater than 1, and N is less than M; and
   sending, by the encoder, the N pieces of compressed information to a decoder.

2. The method according to claim 1, wherein the N pieces of compressed information comprise at least one piece of first compressed information and at least one piece of second compressed information; and
   the first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

3. The method according to claim 1 or 2, wherein a compression manner of the channel information of the M layers is determined based on at least one of the following information:

a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M, wherein

the compression manner of the channel information of the M layers comprises joint compression, or the compression manner of the channel information of the M layers comprises joint compression and separate compression.

4. The method according to any one of claims 1 to 3, wherein the method further comprises:
determining, by the encoder, the compression manner of the channel information of the M layers, wherein the compression manner of the channel information of the M layers comprises joint compression, or the compression manner of the channel information of the M layers comprises joint compression and separate compression.

5. The method according to claim 4, wherein the method further comprises:
sending, by the encoder, the compression manner of the channel information of the M layers to the decoder.

6. The method according to any one of claims 1 to 3, wherein the method further comprises:
receiving, by the encoder, the compression manner of the channel information of the M layers, wherein the compression manner of the channel information of the M layers comprises joint compression, or the compression manner of the channel information of the M layers comprises joint compression and separate compression.

7. The method according to any one of claims 1 to 6, wherein the method further comprises:

receiving, by the encoder, a reference signal from the decoder; and
performing, by the encoder, channel measurement based on the reference signal, to obtain the channel information of the M layers.

8. The method according to claim 7, wherein the method further comprises:
determining, by the encoder, the value of M based on a result of the channel measurement.

9. The method according to any one of claims 1 to 8, wherein the compressing, by an encoder, channel information of M layers by using at least two artificial intelligence AI models comprises:

determining, by the encoder, a first AI model based on an arrangement manner of channel information of each layer and between layers in X layers, wherein the at least two AI models comprise the first AI model, the M layers comprise the X layers, and X is an integer greater than 1 and less than M; and
performing, by the encoder, joint compression on channel information of the X layers by using the first AI model, to obtain first compressed information, wherein the N pieces of compressed information comprise the first compressed information, and
the arrangement manner of the channel information of each layer and between the layers in the X layers comprises any one of the following: adjacent arrangement of channel information of different subbands at a same layer, and adjacent arrangement of channel information of different layers in a same subband.

10. The method according to claim 9, wherein the method further comprises:

receiving, by the encoder, the arrangement manner of the channel information of each layer and between the layers in the X layers from the decoder; or
sending, by the encoder, the arrangement manner of the channel information of each layer and between the layers in the X layers to the decoder.

11. The method according to any one of claims 1 to 10, wherein the method further comprises:
sending, by the encoder, first information to the decoder, wherein the first information indicates a sequence of channel information of different layers during joint compression performed on channel information of at least two layers in the channel information of the M layers.

**12.** The method according to any one of claims 1 to 11, wherein the encoder is a terminal device, and the decoder is a network device.

**13.** The method according to any one of claims 1 to 12, wherein channel information corresponding to each of the N pieces of compressed information does not overlap.

**14.** A communication method, comprising:

receiving, by a decoder, N pieces of compressed information from an encoder, wherein the N pieces of compressed information are obtained by compressing channel information of M layers by using at least two artificial intelligence AI models, each of the N pieces of compressed information is obtained by compressing channel information of a part of layers in the channel information of the M layers by using at least one of the at least two AI models, N and M are integers greater than 1, and N is less than M; and decoding, by the decoder, the N pieces of compressed information to obtain the channel information of the M layers.

**15.** The method according to claim 14, wherein the N pieces of compressed information comprise at least one piece of first compressed information and at least one piece of second compressed information; and
the first compressed information is obtained by performing joint compression on channel information of at least two layers in the channel information of the M layers by using a first AI model in the at least two AI models, and the second compressed information is obtained by performing separate compression on channel information of one layer in the channel information of the M layers by using a second AI model in the at least two AI models.

**16.** The method according to claim 14 or 15, wherein a compression manner of the channel information of the M layers is determined based on at least one of the following information:

a computing resource of the encoder, a computing resource of the decoder, an AI model of the encoder, an AI model of the decoder, performance of performing joint compression on channel information of a part of layers in the channel information of the M layers, performance of performing separate compression on channel information of a part of layers in the channel information of the M layers, and a value of M, wherein
the compression manner of the channel information of the M layers comprises joint compression, or the compression manner of the channel information of the M layers comprises joint compression and separate compression.

**17.** The method according to any one of claims 14 to 16, wherein the decoding, by the decoder, the N pieces of compressed information comprises:
decoding, by the decoder, the N pieces of compressed information based on the compression manner of the channel information of the M layers, wherein the compression manner of the channel information of the M layers comprises joint compression, or the compression manner of the channel information of the M layers comprises joint compression and separate compression.

**18.** The method according to any one of claims 14 to 17, wherein the method further comprises:
determining, by the decoder, the compression manner of the channel information of the M layers.

**19.** The method according to claim 18, wherein the method further comprises:
sending, by the decoder, the compression manner of the channel information of the M layers to the encoder.

**20.** The method according to any one of claims 14 to 19, wherein the method further comprises:
receiving, by the decoder, the compression manner of the channel information of the M layers from the encoder.

**21.** The method according to any one of claims 14 to 20, wherein the decoding, by the decoder, the N pieces of compressed information to obtain the channel information of the M layers comprises:
decoding, by the decoder, the first compressed information based on an arrangement manner of channel information of each layer and between layers in X layers, to obtain channel information of the X layers, wherein the first compressed information is obtained by performing joint compression on the channel information of the X layers by using the first AI model in the at least two AI models, the N pieces of compressed information comprise the first compressed information, the M layers comprise the X layers, and X is an integer greater than 1 and less than M.

**22.** The method according to claim 21, wherein the method further comprises:

sending, by the decoder, the arrangement manner of the channel information of each layer and between the layers in the X layers to the encoder; or
receiving, by the decoder, the arrangement manner of the channel information of each layer and between the layers in the X layers from the encoder.

23. The method according to any one of claims 14 to 22, wherein the method further comprises:
    receiving, by the decoder, first information from the encoder, wherein the first information indicates a sequence of channel information of different layers during joint compression performed on channel information of at least two layers in the channel information of the M layers.

24. The method according to any one of claims 14 to 23, wherein the encoder is a terminal device, and the decoder is a network device.

25. The method according to any one of claims 14 to 24, wherein channel information corresponding to each of the N pieces of compressed information does not overlap.

26. A communication apparatus, comprising modules or units configured to perform the method according to any one of claims 1 to 25.

27. A communication apparatus, comprising a processor, wherein the processor is configured to execute a computer program or instructions stored in a memory, to enable the apparatus to perform the method according to any one of claims 1 to 25.

28. The apparatus according to claim 27, wherein the apparatus further comprises the memory and/or a communication interface, and the communication interface is coupled to the processor; and
    the communication interface is configured to input and/or output information.

29. A processor, wherein the processor is configured to perform the method according to any one of claims 1 to 25.

30. A computer-readable storage medium, wherein the computer-readable storage medium stores a computer program or instructions, and when the computer program or the instructions are run on a communication apparatus, the communication apparatus is enabled to perform the method according to any one of claims 1 to 25.

31. A computer program product, wherein the computer program product comprises a computer program or instructions used to perform the method according to any one of claims 1 to 25.

32. A chip, wherein the chip is coupled to a memory, and is configured to read and execute program instructions stored in the memory, to implement the method according to any one of claims 1 to 25.

33. A communication system, comprising an encoding apparatus and a decoding apparatus, wherein the encoding apparatus is configured to perform the method according to any one of claims 1 to 13, and the decoding apparatus is configured to perform the method according to any one of claims 14 to 25.

FIG. 1

200

Decoder

Encoder

210: The encoder compresses channel information of M layers by using at least two AI models, to obtain N pieces of compressed information, where N and M are integers greater than 1, and N is less than M

220: N pieces of compressed information

230: The decoder decodes the N pieces of compressed information to obtain the channel information of the M layers

FIG. 2

| Layer x Subband 1 | Layer y Subband 1 | Layer z Subband 1 | Layer x Subband 2 | Layer y Subband 2 | Layer z Subband 2 | Layer x Subband 3 | Layer y Subband 3 | Layer z Subband 3 |
|---|---|---|---|---|---|---|---|---|

FIG. 3

| Layer x Subband 1 | Layer x Subband 2 | Layer x Subband 3 | Layer y Subband 1 | Layer y Subband 2 | Layer y Subband 3 | Layer z Subband 1 | Layer z Subband 2 | Layer z Subband 3 |
|---|---|---|---|---|---|---|---|---|

FIG. 4

FIG. 5

EP 4 568 132 A1

FIG. 6

700

| Network device | | Terminal device |

701: Arrangement manner

702: Information about at least one AI model

703: Downlink reference signal

704: Determine a quantity M of layers

705: Determine a compression manner of the M layers

706: Compression manner of the M layers

707: Compress channel information of the M layers based on the compression manner of the M layers, to obtain N pieces of compressed information

708: N pieces of compressed information

709: Decode the N pieces of compressed information based on the compression manner of the M layers, to obtain the channel information of the M layers

FIG. 7

| Layer 1 Subband 1 | Layer 2 Subband 1 | Layer 1 Subband 2 | Layer 2 Subband 2 | Layer 1 Subband 3 | Layer 2 Subband 3 |

FIG. 8

| Layer 3<br>Subband 1 | Layer 3<br>Subband 2 | Layer 3<br>Subband 3 |
|---|---|---|

FIG. 9

1000

| Network device | | Terminal device |
|---|---|---|

1001: Arrangement manner

1002: Information about at least one AI model

1003: Downlink reference signal

1004: Determine a quantity M of layers

1005: Value of M

1006: Determine a compression manner of the M layers

1007: Compression manner of the M layers

1008: Compress channel information of the M layers based on the compression manner of the M layers, to obtain N pieces of compressed information

1009: N pieces of compressed information

1010: Decode the N pieces of compressed information based on the compression manner of the M layers, to obtain the channel information of the M layers

FIG. 10

1100

Transceiver unit 1110

Processing unit 1120

FIG. 11

1200

Processor 1210

Transceiver 1230

Memory 1220

FIG. 12

Chip system 1300

Logic circuit 1310

Input/Output interface 1320

FIG. 13

## INTERNATIONAL SEARCH REPORT

International application No.

**PCT/CN2023/115369**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 编码, 联合, 组合, 压缩, 人工智能, 神经网络, 层, 信道信息, AI, coder, compress, combine, CSI, information, channel, layer, neural network

### C. DOCUMENTS CONSIDERED TO BE RELEVANT

| Category* | Citation of document, with indication, where appropriate, of the relevant passages | Relevant to claim No. |
|---|---|---|
| PX | CN 116346545 A (HUAWEI TECHNOLOGIES CO., LTD.) 27 June 2023 (2023-06-27) description, paragraphs [0003]-[0030] | 1-33 |
| A | WO 2021217519 A1 (HUAWEI TECHNOLOGIES CO., LTD.) 04 November 2021 (2021-11-04) description, page 1 line 27-page 21 line 21, and description page 117 line 20-page 123 line 8 | 1-33 |
| A | WO 2021102954 A1 (ZTE CORP.) 03 June 2021 (2021-06-03) entire document | 1-33 |
| A | WO 2019237344 A1 (QUALCOMM INC. et al.) 19 December 2019 (2019-12-19) entire document | 1-33 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2023** | **21 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115369**

| Patent document cited in search report | | | Publication date (day/month/year) | Patent family member(s) | Publication date (day/month/year) |
|---|---|---|---|---|---|
| CN | 116346545 | A | 27 June 2023 | None | |
| WO | 2021217519 | A1 | 04 November 2021 | None | |
| WO | 2021102954 | A1 | 03 June 2021 | None | |
| WO | 2019237344 | A1 | 19 December 2019 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211038332X